# EUROPÄISCHE PATENTSCHRIFT

(11) **EP 3 576 887 B1**
(45) Veröffentlichungstag und Bekanntmachung des Hinweises auf die Patenterteilung: **05.06.2024**
(21) Anmeldenummer: 18706199.9
(22) Anmeldetag: 31.01.2018
(51) Int. Cl.: B05D 1/00, H01M 4/66, H01M 4/02, B05D 3/04, H01G 11/28, H01M 4/04, H01M 4/131, H01M 4/136, H01M 4/1391, H01M 4/1397, H01M 4/505, H01M 4/525, H01M 4/58

(54) **ATMOSPHÄRENDRUCKPLASMAVERFAHREN ZUR HERSTELLUNG VON PLASMAPOLYMEREN BESCHICHTUNGEN**
ATMOSPHERIC PRESSURE PLASMA METHOD FOR PRODUCING PLASMA POLYMER COATINGS
PROCÉDÉ À PLASMA À PRESSION ATMOSPHÉRIQUE POUR FABRIQUER DES REVÊTEMENTS EN POLYMÈRE PLASMA

(30) Priorität: 31.01.2017 DE 102017201559
(43) Veröffentlichungstag der Anmeldung: 11.12.2019
(73) Patentinhaber: Fraunhofer-Gesellschaft zur Förderung der angewandten Forschung e.V., 80686 München (DE); Plasmatreat GmbH, 33803 Steinhagen (DE)
(72) Erfinder: REGULA, Christoph, 28213 Bremen (DE); IHDE, Jörg, 28865 Lilienthal (DE); WILKEN, Ralph, 26180 Rastede (DE); DEGENHARDT, Jost, 28201 Bremen (DE); KNOSPE, Alexander, 31848 Bad Münder (DE); ASAD, Syed Salman, 33604 Bielefeld (DE); BUSKE, Christian, 33619 Bielefeld (DE)
(74) Vertreter: Hoffmann Eitle
(86) Internationale Anmeldenummer: PCT/EP2018/052421
(87) Internationale Veröffentlichungsnummer: WO 2018/141802

(56) Entgegenhaltungen:
- EP-A1- 2 589 438
- EP-A2- 0 600 718
- DE-A1-102008 058 783
- JP-A- S6 097 569
- US-A1- 2013 040 046
- US-A1- 2014 186 716
- US-A1- 2016 049 226

## Beschreibung

### GEBIET DER ERFINDUNG

Die vorliegende Erfindung betrifft haftungsvermittelnde Schichten, die sich aufgrund ihrer guten Leitfähigkeit bzw. ihres niedrigen Übergangswiderstandes insbesondere für Elektroden in Batterien und Akkumulatoren eignen. Gemäß einem ersten Aspekt betrifft die Erfindung ein Atmosphärendruckplasmaverfahren zur Abscheidung solcher Schichten auf einem metallischen Substrat. Gemäß weiteren Aspekten betrifft die Erfindung eine Elektrode, ein Verfahren zur Herstellung der Elektrode, eine Batteriezelle und einen Lithium-Ionen-Akkumulator. Die vorliegende Erfindung beruht auf dem überraschenden Befund, dass die Einspeisung von organischen Vorläuferverbindungen in den relaxierenden Bereich eines Atmosphärendruckplasmas die Abscheidung einer, vorzugsweise organischen, plasmapolymeren Schicht ermöglicht, die sich als haftungsvermittelnde Schicht zwischen einer metallischen Elektrodenoberfläche und einem Aktivmaterial eignet. Wie sich zeigte, weist die Schicht gute Haftungseigenschaften und einen geringen Übergangswiderstand zwischen einer metallischen Elektrodenoberfläche und einem Aktivmaterial auf.

### STAND DER TECHNIK

Zur Herstellung von Elektroden für Batteriezellen ist eine Beschichtung der metallischen Substrate, beispielweise Metallfolien, direkt nach der Herstellung erforderlich, um die gereinigte Metalloberfläche vor Oxidation zu schützen und die Anhaftung des Aktivmaterials der Batteriezelle zu verbessern. Ein wichtiges Erfordernis einer solchen Schicht sind gute Haftungseigenschaften. Um den Übergangswiderstand zwischen der Metalloberfläche und dem Aktivmaterial zu verringern, was unter anderem den Aufbau dickerer Aktivmaterialschichten ermöglicht, ist zudem eine gute elektrische Leitfähigkeit der haftungsvermittelnden Schicht erforderlich.

Aktuell werden dünne Metallfolien, wie in der EP 2866285 A1 beschrieben, nach der Herstellung chemisch entfettet, gebeizt und es wird eine anti-oxidativ wirkende Chemikalie wie beispielsweise Benzotriazol appliziert. Die Folien werden dann üblicherweise vor der Bearbeitung feinstgereinigt und das Aktivmaterial in Form einer Dispersion, insbesondere durch Aufschlämmung, auf die Oberfläche aufgebracht und getrocknet. Diese Reinigung kann wie in der DE 19702124 A1 beschrieben mittels Corona-Entladung in einem nicht-thermischen Plasma erfolgen. Die DE 4228551 A1 beschreibt eine Reinigung von Oberflächen im Niederdruckplasma. Gelegentlich erfolgt eine Reinigung vor der Plasmabehandlung mittels Lösemittel, beispielsweise durch automatisiertes Abwischen. Auch eine Mikrostrukturierung kann vor der Slurry-Behandlung erfolgen. Ziel aller Behandlungen ist die Verbesserung der Anbindung des Aktivmaterials an die Metalloberfläche der Elektrode, um die Übergangswiderstände zu verringern und die Standfestigkeit des Aktivmaterials auf der Elektrode über eine verbesserte Haftfestigkeit zu verlängern.

Gemäß zahlreichen Patentanmeldungen wurden galvanische Prozesse in wässriger und nicht-wässriger Phase zur Abscheidung haftvermittelnder Schichten speziell auf metallischen Werkstoffen eingesetzt. Als Beispiel kann die EP 0 328 128 A1 zitiert werden.

Es sind Verfahren zur Schichtabscheidung bekannt, die auf einer plasmaaktivierten Gasphasenschichtabscheidung im Niederdruck (z.B. DE 197 48 240 A1) oder bei Atmosphärendruck (z.B. WO 01/32949 A1) basieren.

Weiterhin sind Plasmaverfahren zur Vorbehandlung von Materialoberflächen bekannt, mit denen gute adhäsive Eigenschaften der Materialoberflächen erzeugt werden sollen, ohne dass es zu einer Abscheidung von Schichten kommt. Hierzu kann beispielsweise auf die DE 43 25 377 C1, EP 0 761 415 A2 und die DE 44 07 478 A1 verwiesen werden.

P. Brinkmann et al., Plasma Processes and Polymers 2009, 6 S496-S502 beschreiben die Aufbringung von haftvermittelnden Schichten auf Aluminium. Dabei werden Organosilicium-Präkursoren, wie HMDSO, Tetraethylorthosilikat (TEOS) und Octamethylcyclotetrasiloxan (OMCTS)unter anderem mit einem im Handel erhältlichen Open Air^{®} Plasma Jet abgeschieden. In der verwendeten Plasmaquelle wird das Plasma durch eine Bogenentladung erzeugt. Die verwendete Plasmaquelle entspricht der in WO 01/32949 beschriebenen. Die wissenschaftliche Veröffentlichung macht keine näheren Angaben zu der Zufuhr der Präkursoren. Eine Analyse der abgeschiedenen haftvermittelnden Schichten mittels XPS ergab unabhängig von der verwendeten Vorläuferverbindung fast stöchiometrisches SiO₂, abgesehen von einem Restkohlenstoffgehalt von 0,5-1 Atom%.

Wie in der US 2009/0220794 A1 beschrieben, können siliziumhaltige Beschichtungen Oberflächenfunktionalitäten aufweisen, die sich gut für die Anbindung weiterer Materialien eignen. Aufgrund der geringen Leitfähigkeit von Silikaten eignen sich siliziumbasierte haftungsvermittelnden Schichten jedoch nur bedingt für die Beschichtung von Elektrodenoberflächen.

Die DE 10 2006 003 940 A1 beschreibt die Vorbehandlung der Oberfläche eines Bauteils, insbesondere eines Karosseriebauteils, mit einem Atmosphärendruck-Plasma zur Aktivierung, bevor beispielsweise eine Dichtung aufgeklebt wird.

Die WO 2004/035857 A2 betrifft ein Verfahren zur Applikation einer als Haftschicht einsetzbaren plasmapolymeren Beschichtung auf ein Substrat. In der WO 2004/035857 A2 umfasst das Vorläufermaterial Doppel- und Dreifachbindungen und die Abscheidung auf dem Substrat im Plasmazustand soll so erfolgen, dass zumindest ein Teil der Doppel- und Dreifachbindungen erhalten bleibt. Als Beispiele für Vorläuferverbindungen werden Acetylen, Cyclopentadien und Cyclooctadien genannt. Im Ausführungsbeispiel der WO 2004/035857 A2 wird Acetylen als Vorläuferverbindung und eine Plasmadüse gemäß DE 195 32 412 C2 verwendet. Die Abscheidung erfolgt dabei auf Noryl. Die WO 2004/035857 A2 beschreibt die guten Hafteigenschaften der plasmapolymeren Schicht des so beschichteten Noryls, insbesondere die hohe Haftfestigkeit des Polymers EPDM auf dem beschichteten Noryl.

Die WO 2004/035857 A2 beschreibt die Austrittstemperatur aus einer derartigen Plasmadüse betrage im Allgemeinen über 1000 K. Die Einspeisung der Vorläuferverbindung erfolgt in der der WO 2004/035857 A2 im Düsenkopf, wie in der WO 01/32949 beschrieben. Da der Lichtbogen in der Plasmadüse gemäß der DE 195 32 412 C2 bis zur Austrittsöffnung der Düse reicht, erfolgt die Einspeisung also in den Lichtbogen.

US 2016/0049226 A1 ist auf elektrisch leitende Substratbeschichtungen, die plasmaabgeschiedene konjugierte Polymere umfassen, gerichtet. Die Substratbeschichtungen umfassen eine Schicht eines Dotierungsmaterials zwischen plasmaabgeschiedenen konjugierten Polymeren. Die US 2016/0049226 A1 betrifft ferner ein Verfahren zur Herstellung leitfähiger Beschichtungen, eine Dotierungsschicht mit einem plasmaabgeschiedenen konjugierten Polymer und eine leitfähige Beschichtung bestehend aus konjugiertem Polymer.

EP 2 589 438 A1 betrifft ein Verfahren zur Abscheidung funktioneller Gruppen auf einer Oberfläche eines Erzeugnisses mittels eines Plasmas. Dabei wird ein Plasma erzeugt, aufrecht erhalten und die Oberfläche des Erzeugnisses in die Nähe von oder in einen Raum zwischen den Plasmaelektroden gebracht, wobei eine Vielzahl von funktionellen Gruppen auf mindestens einem Teil der Oberfläche des Erzeugnisses abgeschieden wird. Die Atmosphäre zwischen den beiden Elektroden umfasst eine multifunktionelle, hyperverzweigte Verbindung, die ein Polymer auf der Basis von Monomeren vom ABm-Typ oder ein Derivat eines solchen Polymers ist, wobei m mindestens 2 ist und A und B zwei reaktive funktionelle Gruppen sind, die so ausgewählt sind, dass die Gruppe A mindestens m-mal mit der Gruppe B reagieren kann.

DE 10 2008 058 783 A1 betrifft ein Verfahren zum Aufbringen einer Schicht auf eine Nanooberfläche eines Werkstücks, bei dem ein atmosphärischer Plasmastrahl durch elektrische Entladung in einem Arbeitsgas erzeugt wird und ein Precursormaterial räumlich getrennt vom Arbeitsgas zugeführt wird, wobei das Precursormaterial direkt dem Plasmastrahl zugeführt wird und die aufgebrachte Schicht eine der Nanooberfläche des Werkstücks im Wesentlichen entsprechende Nanooberfläche aufweist.

EP 0 600 718 A2 betrifft eine Sekundärbatterie, die eine lange Lebensdauer aufweist und ein Aktivmaterial für den Negativpol aus Lithium oder Zink umfasst, wobei die Batterie mindestens einen Negativpol aus Lithium oder Zink, der als Aktivmaterial für den Negativpol dient, einen Elektrolyten (Elektrolytlösung), einen Separator, einen Positivpol aus einem Aktivmaterial für den Positivpol, eine Sammelelektrode und ein Batteriegehäuse aufweist, wobei mindestens die Oberfläche des Negativpols mit einem Film bedeckt ist, der eine Struktur aufweist, die den Durchgang von Ionen für die Batteriereaktionen ermöglicht.

US 2014/0186716 A1 ist auf eine geschützte aktive Metallelektrode und eine Vorrichtung mit dieser Elektrode gerichtet. Die geschützte aktive Metallelektrode umfasst ein aktives Metallsubstrat und eine Schutzschicht auf einer Oberfläche des aktiven Metallsubstrats. Die Schutzschicht umfasst mindestens einen dünnen Metallfilm, der die Oberfläche des aktiven Metallsubstrats bedeckt, und einen elektrisch leitenden dünnen Film, der eine Oberfläche des dünnen Metallfilms bedeckt. Das Material der Metalldünnschicht ist Ti, V, Cr, Zr, Nb, Mo, Hf, Ta oder W. Das Material der elektrisch leitenden Dünnschicht ist ausgewählt aus einem Nitrid eines Metalls in der Metalldünnschicht, einem Carbid eines Metalls in der Metalldünnschicht, einem diamantähnlichen Kohlenstoff (DLC) und einer Kombination davon.

US 2013/0040046 A1 bezieht sich auf ein Verfahren zur Herstellung einer Elektrode für ein elektrochemisches Element, das einen Aufschlämmungsherstellungsschritt zur Herstellung einer Aufschlämmung eines Gemisches, das ein aktives Material enthält, einen Aufschlämmungsfüllschritt zum Füllen der Aufschlämmung in kontinuierliche Poren eines porösen Aluminiumkörpers, der die kontinuierlichen Poren aufweist, und einen Aufschlämmungstrockenschritt zum Trocknen der gefüllten Aufschlämmung umfasst, wobei in dem Aufschlämmungsherstellungsschritt eine Aufschlämmung unter Verwendung von Wasser als Lösungsmittel hergestellt wird.

JP S60-97569 A ist auf die Herstellung einer Sekundärbatterie mit reduzierter Selbstentladung gerichtet. Eine hochmolekulare Verbindung mit konjugierten Doppelbindungen in ihrer Hauptkette wird einer Plasmabehandlung unterzogen, und die plasmabehandelte Verbindung wird als aktives Elektrodenmaterial verwendet.

### ZUSAMMENFASSUNG DER ERFINDUNG

Vor dem Hintergrund des zuvor diskutierten Standes der Technik liegt der Erfindung die Aufgabe zugrunde eine Schicht bereitzustellen, die als haftungsvermittelnde Schicht zwischen einer metallischen Elektrodenoberfläche und einem Aktivmaterial angeordnet werden kann. Diese Anwendung stellt die folgenden Anforderungen an die Schicht:
- eine Anhaftung eines Aktivmaterials mit hoher Haftfestigkeit direkt auf die Schicht
- ein geringer Übergangswiderstand in einer Schichtelektrode, die ein Metallsubstrat, die Schicht und ein Aktivmaterial umfasst
- ein thermischer Ausdehnungskoeffizient der Schicht, der bei der Volumenänderung des Aktivmaterials im Entlade-Lade-Zyklus dauerhaft eine gute Anhaftung der Schicht an das Aktivmaterial ermöglicht (Zyklen-Stabilität) und so eine Alterung der Elektrode unterbindet
- vorzugsweise ein guter Alterungsschutz für die Metalloberfläche der Elektrode, beispielsweise vor atmosphärischer Alterung

Diese Aufgabe wird erfindungsgemäß durch ein Verfahren mit den Merkmalen des Anspruchs 1, einer Elektrode mit dem Merkmalen des Anspruchs 6, ein Herstellungsverfahren mit den Merkmalen des Anspruchs 11, eine Batteriezelle mit den Merkmalen des Anspruchs 12 und einen Lithium-Ionen-Akkumulator mit den Merkmalen des Anspruchs 13 gelöst. Bevorzugte Ausführungsformen sind Gegenstand der Unteransprüche.

Es wurde überraschenderweise festgestellt, dass mittels des erfindungsgemäßen Verfahrens plasmapolymere, insbesondere organische plasmapolymere Schichten mit guten haftungsvermittelnden Eigenschaften erzeugt werden können, die in einer Schichtelektrode zu einem geringen Übergangswiderstand zwischen dem metallischen Substrat und dem Aktivmaterial führen.

Gemäß dem ersten Aspekt stellt die vorliegende Erfindung ein Verfahren zur Abscheidung einer plasmapolymeren Schicht in einem Atmosphärendruckplasma auf einem metallischen Substrat bereit. Bei dem Verfahren wird ein Plasma durch eine Entladung zwischen Elektroden erzeugt und mindestens eine organische Beschichtungsvorläuferverbindung in den Bereich des relaxierenden Plasmas eingespeist und als plasmapolymere Schicht auf dem metallischen Substrat abgeschieden,
wobei Stickstoff oder Formiergas, vorzugsweise Stickstoff, als Prozessgas verwendet wird und die mindestens eine organische Beschichtungsvorläuferverbindung ausgewählt ist aus der Gruppe, bestehend aus zyklischen nicht-funktionalisierten Kohlenwasserstoffen und Kohlenwasserstoffen mit mindestens einer funktionellen Gruppe, ausgewählt aus Alkoholgruppe, Carbonylgruppe, Aminogruppe und Kohlenstoff-Kohlenstoff-Mehrfachbindung,,
wobei die heterozyklische Verbindung Tetrahydrofuran, Tetrahydrothiophen, Piperidin, Pyrrolidin, 2,3-Dihydrofuran, 2,5-Dihydrofuran, 2,3-Dihydrothiophen, 2,5-Dihydrothiophen, 1-Pyrrolin, 2-Pyrrolin oder 3-Pyrrolin ist, und
wobei der Kohlenwasserstoff mit mindestens einer funktionellen Gruppe ein nicht-zyklischer Kohlenwasserstoff mit mindestens einer funktionellen Gruppe, ausgewählt aus C-C-Doppelbindung, C-C-Dreifachbindung, und Carbonylgruppe, oder ein zyklischer nicht-aromatischer Kohlenwasserstoff mit mindestens einer funktionellen Gruppe, ausgewählt aus C-C-Doppelbindung, C-C-Dreifachbindung, Carbonylgruppe, Alkoholgruppe und Aminogruppe, ist.

Des Weiteren kann die im Verfahren gemäß dem ersten Aspekt verwendete mindestens eine organische Beschichtungsvorläuferverbindung auch eine heterozyklische Verbindung sein.

Das Verfahren beruht auf dem überraschenden Befund, dass die Einspeisung von bestimmten organischen Vorläuferverbindungen unter bestimmen Bedingungen in den relaxierenden Bereich eines Atmosphärendruckplasmas zur Abscheidung einer plasmapolymeren Schicht führt, die eine gute Anhaftung von Aktivmaterial auf eine Metalloberfläche ermöglicht und zu einem geringen Übergangswiderstand in der Elektrode führt.

Gemäß dem zweiten Aspekt stellt die Erfindung eine Elektrode bereit, die ein metallisches Substrat mit einer Oberfläche, eine plasmapolymere Schicht auf der Oberfläche des metallischen Substrats, und eine Schicht, die ein Aktivmaterial umfasst, auf der dem Substrat abgewandten Oberfläche der plasmapolymeren Schicht umfasst, wobei die plasmapolymere Schicht konjugierte Mehrfachbindungen enthält.

Gemäß dem dritten Aspekt betrifft die Erfindung ein Verfahren zur Herstellung einer Elektrode gemäß dem zweiten Aspekt der Erfindung. Das Verfahren umfasst die folgenden Schritte: Reinigen einer Oberfläche eines metallischen Substrats, Abscheiden einer plasmapolymeren Schicht auf der Oberfläche des metallischen Substrats gemäß dem Verfahren nach dem ersten Aspekt der Erfindung, und Aufbringen eines Aktivmaterials auf der dem Substrat abgewandten Oberfläche der plasmapolymeren Schicht, dadurch gekennzeichnet, dass die plasmapolymere Schicht unter Atmosphärendruck abgeschieden wird.

Gemäß dem vierten Aspekt betrifft die Erfindung eine Batteriezelle, die eine Elektrode gemäß dem zweiten Aspekt der Erfindung umfasst.

Gemäß dem fünften Aspekt betrifft die Erfindung einen Lithium-Ionen-Akkumulator, der eine Elektrode gemäß dem zweiten Aspekt der Erfindung umfasst.

### KURZE BESCHREIBUNG DER ZEICHNUNGEN

Fig. 1 veranschaulicht die Abscheidung einer plasmapolymeren Schicht auf einem Substrat nach dem erfindungsgemäßen Verfahren, wobei die organische Beschichtungsvorläuferverbindung dieser Schicht in den Afterglow-Bereich eines Atmosphärendruckplasmastrahls eingespeist wird.
Fig. 2 zeigt eine schematische Schnittansicht eines erfindungsgemäß verwendbaren Düsenkopfs mit Gitterstruktur.
Fig. 3 zeigt ein Infrarotspektrum einer erfindungsgemäßen plasmapolymeren Schicht.
Fig. 4 vergleicht ein Infrarotspektrum einer erfindungsgemäßen plasmapolymeren Schicht mit dem Infrarotspektrum der Beschichtungsvorläuferverbindung.
Fig. 5 zeigt eine schematische Schnittansicht eines erfindungsgemäß verwendbaren mehrteiligen Düsenkopfs mit innerer Struktur zum Behindern des Eintritts des Lichtbogens oder der lichtbogenähnlichen Entladung in den Einspeisebereich im Düsenkopf.

### AUSFÜHRLICHE BESCHREIBUNG DER ERFINDUNG

### Verfahren zur Abscheidung einer plasmapolymeren Schicht

Das Verfahren gemäß dem ersten Aspekt der Erfindung ist in Patentanspruch 1 und im Abschnitt Zusammenfassung der Erfindung (1) definiert. Bevorzugte Ausführungsformen sind Gegenstand der abhängigen Patentansprüche 2-5 und 1 sowie der Merkmalssätze 2-15 und 26 bis 34.

Das Verfahren gemäß dem ersten Aspekt der Erfindung ist ein Verfahren zur Abscheidung einer plasmapolymeren Schicht in einem Atmosphärendruckplasma auf einem metallischen Substrat.

### Atmosphärendruckplasma

Unter einem "Atmosphärendruckplasma", das auch als AD-Plasma oder Normaldruckplasma bezeichnet wird, versteht man ein Plasma, bei dem der Druck ungefähr dem Atmosphärendruck entspricht. C. Tendero et al. geben in "Atmospheric pressure plasmas: A review", Spectrochimica Acta Part B: Atomic Spectroscopy, 2006, S. 2-30 einen Überblick über Atmosphärendruckplasmen.

Die Abscheidung der plasmapolymeren Schicht bei Atmosphärendruck auf der Oberfläche des metallischen Substrats ermöglicht eine besonders einfache und kostengünstige Durchführung des erfindungsgemäßen Verfahrens, da keine Niederdruckeinrichtungen, wie z. B. Niederdruckkammern, Vakuumpumpen, Vakuumventile und dergleichen, erforderlich sind und die Prozessführung erleichtert wird.

Die Eigenschaften von plasmapolymeren Schichten hängen stark von den Abscheidungsbedingungen ab. Eine bei Atmosphärendruck abgeschiedene plasmapolymere Schicht enthält selbst bei Verwendung sauerstoff- und stickstofffreier Beschichtungsvorläuferverbindungen Sauerstoff und Stickstoff. Durch Nachreaktionen mit der Umgebungsatmosphäre kann auch in bei Niederdruck abgeschiedenen plasmapolymeren Schichten ein geringer Anteil an Sauerstofffunktionalitäten an der direkten Oberfläche nachgewiesen werden. Jedoch ist die Konzentration der Sauerstofffunktionalitäten geringer als bei einer bei Atmosphärendruck abgeschiedenen plasmapolymeren Schicht. Zudem wird bei Atmosphärendruck der Einbau von Stickstoff in die plasmapolymere Schicht beobachtet. In einer bei Niederdruck abgeschiedenen plasmapolymeren Schicht erfolgt der Einbau von Stickstoff nur bei Verwendung von Stickstoff als Prozessgas und in einem typischerweise geringeren Maß im Vergleich zu einer bei Atmosphärendruck abgeschiedenen plasmapolymeren Schicht. Da sauerstoff- und stickstoffhaltige funktionelle Gruppen in der plasmapolymeren Schicht zu deren Reaktivität und haftvermittelnder Wirkung beitragen, ist ein Atmosphärendruckplasmaprozess vorteilhaft.

Als Elektrode im Verfahren gemäß dem ersten Aspekt der Erfindung werden Elemente zur Erzeugung des Atmosphärendruckplasmas verstanden, die zumindest zeitweise als Ausgangs- oder Endpunkt des Entladungsfilaments dienen. In dem erfindungsgemäßen Verfahren können mehrere Elektroden aus dem gleichen oder verschiedenen Material eingesetzt werden. Die Entladung ist bevorzugt eine bogenähnliche Entladung. Grundsätzlich wird in einem Plasma der aktive und der relaxierende Bereich des Plasmas unterschieden.

Unter einem aktiven Plasmabereich wird allgemein ein Plasmabereich verstanden, der sich innerhalb des Volumens befindet, das von den Elektroden begrenzt wird, zwischen denen eine Spannung anliegt, durch die das Plasma erzeugt wird. In dem aktiven Plasmabereich liegen freie Elektronen und Ionen getrennt vor.

Der Bereich des relaxierenden Plasmas befindet sich außerhalb der Anregungszone, die durch die Elektroden begrenzt ist. Der relaxierende Bereich des Plasmas wird auch als "after glow"-Bereich bezeichnet. Im Bereich des relaxierenden Plasmas liegen keine oder nur wenige freie Elektronen und Ionen vor, sondern vielmehr angeregte Atome oder Moleküle. Der Bereich des relaxierenden Plasmas liegt also außerhalb des Bereichs der Entladung, der vorzugsweise ein Lichtbogen oder eine lichtbogenähnliche Entladung ist. Eine lichtbogenähnliche Entladung im erfindungsgemäßen Sinn ist beispielsweise ein Lichtbogen welcher nicht dauerhaft brennt, wie z.B. ein gepulster Lichtbogen. Anders gesagt kann der hier verwendete Begriff "Lichtbogen" auch einen nicht dauerhaft brennenden Lichtbogen, beispielsweise einen gepulsten Lichtbogen, umfassen. In einer Plasmadüse ist der relaxierende Bereich des Atmosphärendruckplasmas der Bereich auf der Abströmseite der Anregungszone (also beginnend an der Elektrode näher am Auslass der Plasmadüse).

Im Verfahren gemäß dem ersten Aspekt der vorliegenden Erfindung erfolgt die Einspeisung der Beschichtungsvorläuferverbindung in den Bereich des relaxierenden Plasmas.

### Prozessgas

Als Prozessgas wird erfindungsgemäß Stickstoff oder Formiergas eingesetzt, um eine möglichst sauerstofffreie Atmosphäre in der Plasmadüse zu erzeugen, so dass eine Verbrennung und eine übermäßig starke Fragmentierung der Beschichtungsvorläuferverbindungen weitgehend unterbunden werden kann. Als Formiergas im erfindungsgemäßen Sinn werden reduzierend wirkende Gasgemische aus Stickstoff oder Argon und Wasserstoff bezeichnet. Das Prozessgas wird über eine Leitung in eine Vorrichtung zur Erzeugung des Atmosphärendruckplasmas, insbesondere eine Plasmadüse, eingeleitet. Um die Sauerstoffkonzentration im Bereich des relaxierenden Plasmas weiter zu verringern wird vorzugsweise zusätzlich ein Mantelstrahl aus Inertgas um den Düsenausgang der Plasmadüse herum erzeugt.

### Plasmadüse

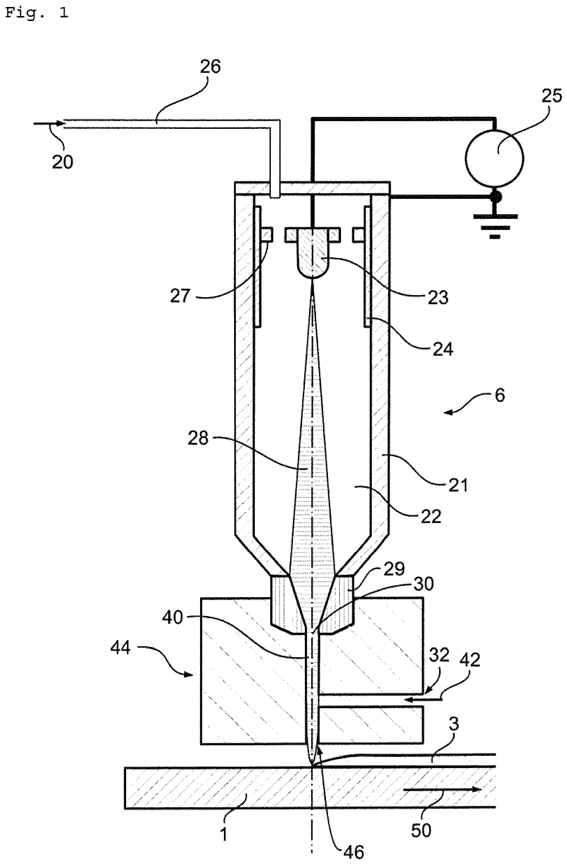

Das Plasma ist im erfindungsgemäßen Verfahren bevorzugt ein Plasmastrahl. Ein Plasmastrahl kann durch eine Plasmadüse erzeugt werden. Das Plasma unter Atmosphärendruck wird im erfindungsgemäßen Verfahren vorzugsweise mit einer Atmosphärendruckplasmadüse erzeugt. Der grundsätzliche Aufbau einer solchen Plasmadüse wird im Folgenden unter Bezugnahme auf Fig. 1 näher erläutert. Die Plasmadüse 6 weist ein elektrisch leitfähiges Gehäuse 21 auf, das vorzugsweise länglich, insbesondere rohrförmig ausgebildet ist. Das Gehäuse bildet einen von einem Prozessgas durchströmten Düsenkanal 22. In dem Düsenkanal ist, vorzugsweise koaxial, eine Elektrode 23 angeordnet. Ein Rohr 24 eines dielektrischen Materials, beispielsweise ein Keramikrohr, ist in den Düsenkanal 22 eingesetzt. Mittels eines Hochfrequenzgenerators 25 wird eine Spannung zwischen der Elektrode und dem Gehäuse angelegt. Das Prozessgas 20 wird durch eine Leitung 26 in den Düsenkanal eingeleitet, und zwar vorzugsweise so, dass es drallförmig durch den Kanal hindurchströmt. Diese Strömung des Prozessgases kann durch eine Dralleinrichtung 27 erreicht werden. Dabei kann es sich um eine Platte mit Löchern handeln.

Beim Betrieb der Atmosphärendruckplasmadüse verläuft die Plasmaentladung 28, beispielsweise eine bogenähnliche Entladung, von der Spitze der Mittelelektrode 23 im Wesentlichen in Axialrichtung des Düsenkanals 22 zu der Gegenelektrode 29, die ebenso wie das Gehäuse 21 geerdet ist. Hierdurch tritt ein Plasmastrahl 40 unmittelbar unterhalb des Düsenausgangs 30 aus. Im Ergebnis wird beim Betrieb der Plasmadüse unterhalb der Düsenöffnung ein Plasmastrahl in Form einer "Flamme" erzeugt. Grundsätzlich können im erfindungsgemäßen Verfahren beliebige Plasmadüsen eingesetzt werden. Bevorzugt kommt das PlasmaPlus^{®}-System der Firma Plasmatreat (Steinhagen, Deutschland) zum Einsatz.

Der relaxierende Bereich des Atmosphärendruckplasmas, der auch als Afterglow-Bereich bezeichnet werden kann, liegt außerhalb der Anregungszone, die durch die Elektroden begrenzt ist. Folglich befindet sich in Fig. 1 der relaxierende Bereich des Plasmastrahls 40 zwischen dem Düsenausgang 30 und dem Substrat 1.

In einer besonders bevorzugten Ausführungsform wird eine Plasmadüse verwendet, die die folgenden Elemente umfasst: ein Gehäuse, das einen von einem Prozessgas durchströmten Düsenkanal bildet, eine im Düsenkanal angeordnete Elektrode, eine Gegenelektrode, und einen Hochfrequenzgenerator zum Anlegen einer Spannung zwischen der Elektrode und der Gegenelektrode, um einen Plasmastrahl zu bilden, der aus einem Auslass des Gehäuses austritt, einen im Düsenkanal zwischen der Elektrode und dem Auslass angeordneten Beschichtungsdüsenkopf mit einer inneren Gitterstruktur, und einer Einrichtung zum Einspeisen der verdampften, mindestens einen organischen Beschichtungsvorläuferverbindung in den Plasmastrahl im relaxierenden Bereich des Plasmas im Düsenkopf.

In einer weiteren bevorzugten Ausführungsform stellt das Gehäuse selbst die Gegenelektrode zur im Düsenkanal angeordneten Elektrode dar.

Unter Hochfrequenz im erfindungsgemäßen Sinn werden Frequenzen im Bereich von 100 Hz bis 1 MHz, vorzugsweise 1 bis 100 kHz, mehr bevorzugt 10 bis 40 kHz verstanden. Mithin wird der erfindungsgemäß verwendbare Hochfrequenzgenerator in diesem Frequenzbereich betrieben.

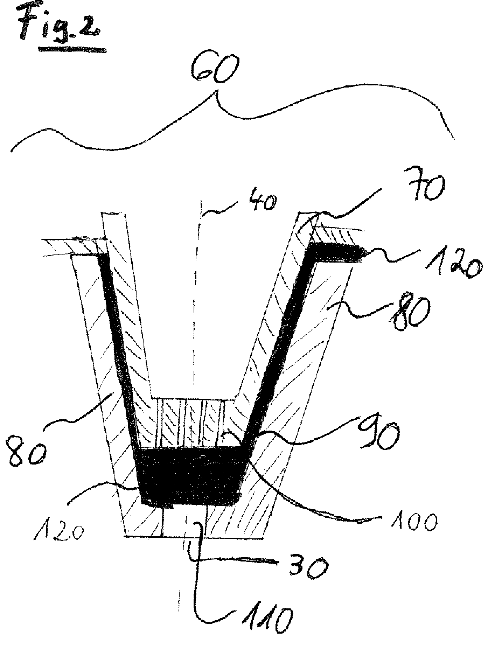

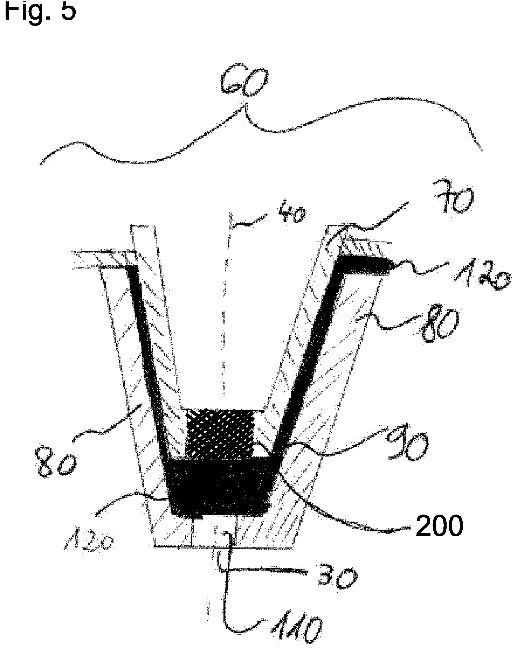

In einer weiteren bevorzugten Ausführungsform wird ein mehrteiliger Beschichtungsdüsenkopf verwendet, der ein Mittel zur Behinderung des Eintritts des Lichtbogens oder der lichtbogenähnlichen Entladung in den unteren Teil des Beschichtungsdüsenkopfes umfasst. Ein erfindungsgemäß verwendbarer mehrteiliger Beschichtungsdüsenkopf, der ein solches Mittel umfasst, ist beispielsweise in Fig. 2 und 5 gezeigt und wird nachfolgend beschrieben.

Unter einem Mittel zur Behinderung des Eintritts des Lichtbogens oder der lichtbogenähnlichen Entladung wird ein Mittel verstanden, das den Lichtbogen oder die lichtbogenähnliche Entladung abschirmt. Durch das Mittel zur Behinderung des Eintritts des Lichtbogens oder der lichtbogenähnlichen Entladung können potentialführende Bestandteile des Plasmas, speziell der Anregungsbogen (aktive Anregungszone des Plasmas), weitgehend zurückgehalten werden. Das Mittel zur Behinderung des Eintritts des Lichtbogens oder der lichtbogenähnlichen Entladung bildet bevorzugt zusammen mit einem inneren Teil eines mehrteiligen Beschichtungsdüsenkopfes ein Schirmelement, und mehr bevorzugt einen Faradayschen Käfig. Unter einem Schirmelement im erfindungsgemäßen Sinn wird ein Mittel verstanden, das eine Dämpfung von mindestens 50 dB, bevorzugt mindestens 70 dB und mehr bevorzugt mindestens 110 dB aufweist. Ein gängiges Messverfahren zur Dämpfung stellt beispielsweise die Norm IEEE-STD 299.1-2013 dar.

Der Beschichtungsdüsenkopf mit einer inneren Gitterstruktur ist im Schlussbericht des BMBF-Projekts "Grundlegende Untersuchung der Tauglichkeit von Plasma-Jet-Beschichtungen zur Verbesserung der Zuverlässigkeit von Leiterplatten und OLEDs" auf Seite 25 beschrieben. Durch die innere Gitterstruktur kann der Beschichtungsdüsenkopf potentialführende Bestandteile des Plasmas, speziell den Anregungsbogen (aktive Anregungszone des Plasmas), weitgehend zurückhalten. Im Gegensatz zu üblichen Plasmadüsen ermöglicht dieser Beschichtungsdüsenkopf die Einspeisung thermisch empfindlicher organischer Beschichtungsvorläuferverbindung direkt am oder in den Plasmadüsenkopf in ein weitgehend potentialfreies relaxierendes Plasma. Somit kann unter Verwendung des Beschichtungsdüsenkopfes mit einer inneren Gitterstruktur eine weitgehend zerstörungsfreie, effiziente Anregung der organischen Beschichtungsvorläuferverbindung im Plasmastrahl erreicht werden.

Eine Ausführungsform des erfindungsgemäß vorteilhaft verwendbaren Düsenkopfs mit einer inneren Gitterstruktur ist in Fig. 2 schematisch dargestellt. Darin ist gezeigt, dass der Düsenkopf 60 aus einem inneren Teil 70 und einem äußeren Teil 80 besteht. Der innere Teil 70 ist am Austritt mit einer inneren Gitterstruktur 100 versehen. Die innere Gitterstruktur 100 weist Öffnungen bzw. Löcher auf. Der innere Teil 70 hält den Lichtbogen zurück. Der Lichtbogen wird dadurch bevorzugt innerhalb des Bereichs der aktiven Anregung, also des aktiven Plasmabereichs, gehalten. Der äußere Teil 80 bildet zusammen mit dem inneren Teil 70 einen umlaufenden Spalt 90, in den die verdampfte, beispielsweise gasförmige, Beschichtungsvorläuferverbindung 120 eingespeist wird und dann direkt unter der Gitterstruktur 100 in den relaxierenden Bereich des Plasmas 110 gelangt. Unmittelbar danach tritt das die angeregte Beschichtungsvorläuferverbindung enthaltende Gas am Düsenausgang 30 aus dem Düsenkopf 60 aus. Der vertikale Plasmastrahl 40 tritt unmittelbar unterhalb des Düsenausgangs 30 aus.

In einem weiteren Aspekt der vorliegenden Erfindung wird ein mehrteiliger Beschichtungsdüsenkopf bestehend aus einem inneren Teil und einem äußeren Teil verwendet. Eine Ausführungsform eines mehrteiligen Beschichtungsdüsenkopfs 60 ist in Fig. 5 schematisch dargestellt. Der innere Teil 70 besitzt am unteren Ende einen Austritt. Der Austritt ist mit einer inneren Struktur 200 versehen, die den Lichtbogen oder die lichtbogenähnliche Entladung zurückhält. Der Lichtbogen oder die lichtbogenähnliche Entladung wird dadurch bevorzugt innerhalb des Bereichs der aktiven Anregung, also des aktiven Plasmabereichs oberhalb des innere Teils 70, gehalten. Der äußere Teil 80 bildet zusammen mit dem inneren Teil 70 einen umlaufenden Spalt 90, in den die verdampfte, beispielsweise gasförmige, Beschichtungsvorläuferverbindung 120 eingespeist wird und dann direkt unterhalb (stromabwärts) vom inneren Teil in den relaxierenden Bereich des Plasmas 110 gelangt. Unmittelbar danach tritt das die angeregte Beschichtungsvorläuferverbindung enthaltende Gas am Düsenausgang 30 aus dem Düsenkopf 60 aus. Der vertikale Plasmastrahl 40 tritt unmittelbar unterhalb des Düsenausgangs 30 aus. Der Raum 90 im Düsenkopf, der durch den inneren Teil 70 und den äußeren Teil 80 des Düsenkopfes gebildet wird, wird auch als Einspeisebereich bezeichnet. Der Austritt am unteren Ende des inneren Teils 70 stellt somit den Übergang zum Einspeisebereich 90 dar.

Die innere Struktur 200 am unteren Ende (Austritt) des inneren Teils 70 des Düsenkopfs 60 stellt ein Mittel zum Behindern des Einritts des Lichtbogens oder der lichtbogenähnlichen Entladung in den Einspeisebereich 90 dar. Dieses Mittel kann die potentialführenden bzw. gemittelt potetialführenden Bestandteile des Plasmas bzw. der Plasmaanregung weitgehend zurückhalten, so dass im Einspeisebereich 90 innerhalb des Düsenkopfes 60 ein weitgehend potentialfreies relaxierendes Plasma vorliegt. Dies ermöglicht eine weitgehend zerstörungsfreie, effiziente Anregung der organischen Beschichtungsvorläuferverbindung im Plasmastrahl 40 im Düsenkopf 60.

In einer bevorzugten Ausführungsform bildet der innere Teil 70 des Düsenkopfes zusammen mit der inneren Struktur 200 am Austritt des inneren Teils 70, die den Lichtbogen oder die lichtbogenähnliche Entladung zurückhält, ein Schirmelement, mehr bevorzugt einen Faradayschen Käfig. Unter einem Schirmelement im erfindungsgemäßen Sinn wird ein Mittel verstanden, dass eine Dämpfung von mindestens 50 dB, bevorzugt von mindestens 70 dB, und mehr bevorzugt von mindestens 110 dB aufweist. Ein gängiges Messverfahren zur Bestimmung der Dämpfung stellt beispielsweise die Norm IEEE-STD 299.1-2013 dar.

Die innere Struktur 200 am Austritt des inneren Teils 70 des Düsenkopfes 60, die als Mittel zum Behindern des Eintritts des Lichtbogens oder der lichtbogenähnlichen Entladung in den Einspeisebereich 90 wirkt, kann die bereits oben beschriebenen innere Gitterstruktur, eine Lochstruktur, also eine mit Öffnungen bzw. Löchern versehene Struktur, eine Verengung des Austritts des inneren Teils 70, bevorzugt durch eine Kante, oder ein Isolator sein. Ist die Struktur, die den Lichtbogen oder die lichtbogenähnliche Entladung zurückhält ein Isolator, beispielsweise Aluminiumoxid, so erfolgt die Entladung im Bereich des Düsenkopfes oberhalb der Isolierung. Der Isolator umfasst mindestens eine Bohrung, durch die der Plasmastrahl in den Einspeisebereich austreten kann. Der Isolator kann auch ein Gas sein. So kann durch die Verlängerung des Düsenkopfes nach unten ein erhöhter Abstand des Ortes der Einspeisung der Beschichtungsvorläuferverbindung vom Entladungsbereich bewirkt werden, so dass der Lichtbogen oder die lichtbogenähnliche Entladung den Ort der Einspeisung nicht mehr erreicht. Dies kann auch dadurch erreicht werden, dass auf den unteren Teil des Düsenkopfes ein Röhrchen aufgesetzt und am Ende des Röhrchens einspeist wird. In diesem Fall befindet sich zwischen dem inneren Teil 70 und dem äußere Ende des Röhrchens ein größeres Gasvolumen, das isolierend wirken kann.

### Abscheidung einer plasmapolymeren Schicht

Folgende Reaktionsschritte können zur Abscheidung einer plasmapolymeren Schicht führen:
Im ersten Schritt werden die in den relaxierenden Bereich des Plasmas eingespeisten Moleküle der organischen Beschichtungsvorläuferverbindung durch das Plasma angeregt.

Die Einspeisung der organischen Beschichtungsvorläuferverbindung in den relaxierenden Bereich des Plasmas in einer Stickstoffatmosphäre führt dabei zu einer Anregung der Beschichtungsvorläuferverbindung ohne dass es zu einer übermäßig starken Fragmentierung der Moleküle kommt. Zudem kann durch die Einspeisung in den relaxierenden Bereich des Plasmas die ungewollten Oxidation der fragmentierten Moleküle zu Kohlenstoffmonoxid oder Kohlenstoffdioxid verringert werden. Die lokale Stickstoffatmosphäre im relaxierenden Bereich des Plasmas verringert die Oxidation ebenfalls. Die angeregten Moleküle der organischen Beschichtungsvorläuferverbindung können in der Gasphase mit weiteren Teilchen reagieren. Nach dem Transport zur Substratoberfläche erfolgt die Adsorption auf der Substratoberfläche. Auf der Substratoberfläche kann das angeregte Molekül weiter mit benachbarten Teilchen reagieren, so dass eine plasmapolymere Schicht entsteht. Durch die Kollision von Teilchen in der Gasphase oder eines Teilchens mit der Substratoberfläche kann eine zusätzliche Anregung erfolgen.

Um die gewünschten Plasmapolymerschichten zu erhalten, erwies es sich im Rahmen der vorliegenden Erfindung als besonders vorteilhaft, eine gepulste Entladung mit einer primären Leistungsaufnahme zwischen 50 und 4000 W, vorzugsweise zwischen 100 und 2000 W und besonders bevorzugt zwischen 150 und 1500 W zu verwenden.

### Metallisches Substrat

Bei dem metallischen Substrat im erfindungsgemäßen Sinn handelt es sich insbesondere um einen Festkörper, der überwiegend (also >50 Gew.-%) Metall umfasst, vorzugsweise einen Festkörper, der mindestens 90 Gew.-%, mehr bevorzugt mindestens 95 Gew.-%, ganz besonders mindestens 99 Gew.-% Metall umfasst. Das Metall/die Metalle können auch in Form von Metalllegierungen vorliegen. Das metallische Substrat ist bevorzugt eine Metallfolie. Metallische Substrate, insbesondere Metallfolien, aus Kupfer, Silber, Eisen, Nickel, Cobalt und Aluminium sind besonders bevorzugt. Die am meisten bevorzugten metallischen Substrate sind Aluminium- und Kupferfolien. Die verwendeten Metallfolien, insbesondere die Aluminium- und Kupferfolien, werden bevorzugt durch Walzen oder elektrolytisch hergestellt. Die Oberfläche des metallischen Substrats kann vor der Abscheidung der plasmapolymeren Schicht mittels eines Plasmas oder chemisch gereinigt werden. So können Verunreinigungen, beispielsweise Oxide, auf der Oberfläche des metallischen Substrats mithilfe eines Lösemittels, beispielsweise Isopropanol, entfernt werden. Zudem kann die Oberfläche des metallischen Substrats, beispielsweise durch chemische Vorbehandlung (z.B. Beizen) oder Vorbehandlung in einem Plasma, zur besseren Anbindung der auf ihr abzuscheidenden plasmapolymeren Schicht in einen reaktiveren Zustand versetzt werden.

### Organische Beschichtungsvorläuferverbindung

Da wie oben beschrieben im erfindungsgemäßen Verfahren eine weitgehend zerstörungsfreie Einspeisung der organischen Beschichtungsvorläuferverbindung möglich ist, hängen die Eigenschaften der plasmapolymeren Schicht unter anderem von der Auswahl der organischen Beschichtungsvorläuferverbindung(en) ab.

Überraschenderweise wurde beobachtet, dass in einer nach dem erfindungsgemäßen Verfahren abgeschiedenen plasmapolymeren Schicht die in den organischen Beschichtungsvorläuferverbindung enthaltenen funktionellen Gruppen zu einem gewissen Grad erhalten bleiben (siehe Beispiel). Dies führt zu einer chemische Restreaktivität bzw. latenten Reaktivität der nach dem erfindungsgemäßen Verfahren abgeschiedenen Plasmapolymerschicht. Es wird vermutet, dass die Restreaktivität dieser funktionellen Gruppen zu den guten Hafteigenschaften der plasmapolymeren Schicht beiträgt.

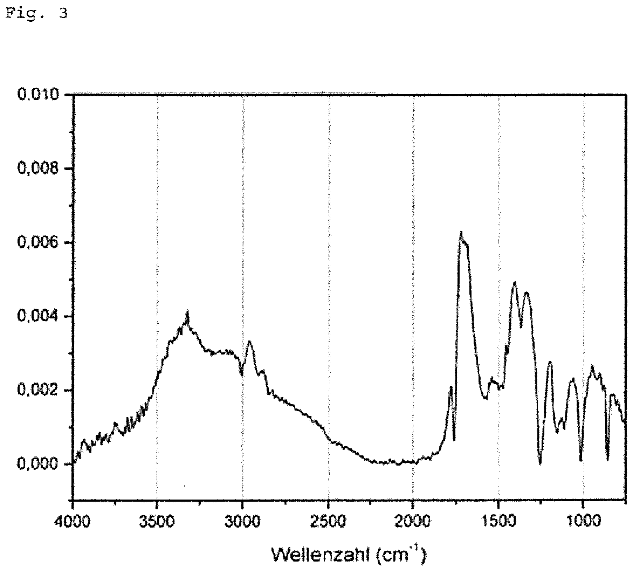

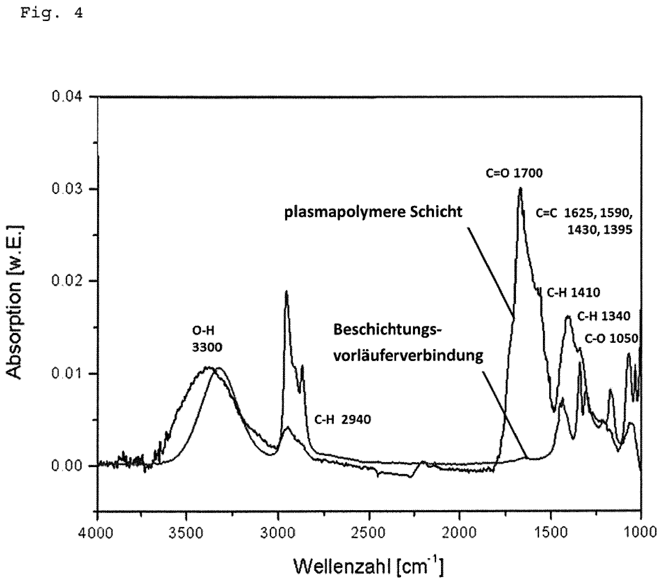

Überraschenderweise wurde beobachtet, dass in einer nach dem erfindungsgemäßen Verfahren abgeschiedenen plasmapolymeren Schicht Doppelbindungen, insbesondere konjugierte Doppelbindungen, vorhanden sind, wie mittels InfrarotSpektroskopie nachgewiesen werden konnte (siehe Fig. 3 und 4). Banden mit Wellenzahlen im Bereich von 1640 bis 1680 cm⁻¹ können C=C-Doppelbindungen zugeordnet werden. Typischerweise sind die IR-Banden von C=C-Doppelbindungen ohne Konjugation schwächer ausgeprägt. Zudem sind die Banden konjugierter Doppelbindungen häufig zu niedrigeren Wellenzahlen (cm⁻¹) hin verschoben. Die Banden im Bereich von 3300, 1700 und 1050 cm⁻¹ zeigen das Vorhandensein von Sauerstofffunktionalitäten in der plasmapolymeren Schicht. Die deutlich ausgeprägten C-H-Schwingungen bei 2940, 1410 und 1340 cm⁻¹ zeigen, dass eine organische plasmapolymere Schicht abgeschieden wurde und sind ein Indiz für die schwache Fragmentierung der Beschichtungsvorläuferverbindung im relaxierenden Plasma, da hier die selben Schwingungen der Vorläuferverbindung, wenn auch schwächer, erhalten bleiben.

Die Messung der Infrarot-Spektren kann mit Hilfe der Probentechnik Infrarot-Reflexions-Absorptions-Spektroskopie, die im Folgenden als IRRAS abgekürzt wird, erfolgen. IRRAS ist eine Probentechnik der Infrarotspektroskopie für die zerstörungsfreie Untersuchung von dünnen Schichten und stellt eine Mischform der Transmissions- und der Reflexionsinfrarotspektroskopie dar.

Die Infrarot-Spektren der plasmapolymeren Schicht wurden mit einem IR-Spektrometer des Typs "Equinox 55" der Firma Bruker gemessen. Dabei wurde die IRRAS Messmethode in Reflexion mit einem Winkel von 32°, einer Wellenzahl von 700-4000 cm⁻¹ mit 32 Scans auf einem kupferbedampften Wafer mit 600 nm PVD Kupfer angewandt. PVD Kupfer im erfindungsgemäßen Sinn bezeichnet durch physikalische Gasabscheidung (Physical Vapour Deposition, PVD) abgeschiedenes Kupfer.

Infrarot-Spektren der organischen Beschichtungsvorläuferverbindungen können mittels ATR-Spektroskopie in Flüssigphase gemessen werden. ATR (attenuated total reflection)-Spektroskopie ist eine Messmethode der Infrarotspektroskopie, die sich auch für flüssige Proben eignet.

Es wird vermutet, dass die überraschend hohe Dauerhaftigkeit der Anhaftung eines Aktivmaterials an die plasmapolymere Schicht auf der Oberfläche eines metallischen Substrats auf den geeigneten thermischen Ausdehnungskoeffizienten der plasmapolymeren Schicht zurückzuführen ist.

Konjugierte Doppelbindungen sind Systeme mit alternierenden Doppel- und Einfachbindungen. Systeme mit nur einer Doppelbindung oder mit mehreren Doppelbindungen, in denen mehr als eine oder keine Einfachbindung zwischen den Doppelbindungen liegen, werden als nicht-konjugiert oder isoliert bezeichnet.

Es wird vermutet, dass diese Doppelbindungen zu einer besseren elektrischen Leitfähigkeit der Schicht und damit zu einem geringen Übergangswiderstand der haftvermittelnden Schicht in einer Elektrode führen. Es wird ferner angenommen, dass die Doppelbindungen aufgrund ihrer hohen chemischen Reaktivität zu den guten Hafteigenschaften der erfindungsgemäßen plasmapolymeren Schicht beitragen.

Entsprechend dem überraschenden Befund, dass in einer nach dem erfindungsgemäßen Verfahren abgeschiedenen plasmapolymeren Schicht die funktionellen Gruppen der organischen Beschichtungsvorläuferverbindungen zu einem gewissen Teil erhalten bleiben, wurden deshalb auch Beschichtungsvorläuferverbindungen, die Doppelbindungen und konjugierte π-Elektronensystem enthalten, verwendet.

Die organischen Beschichtungsvorläuferverbindung(en) wird/werden aus der Gruppe bestehend aus heterozyklischen Verbindungen, zyklischen nicht-funktionalisierten Kohlenwasserstoffen und Kohlenwasserstoffen mit mindestens einer funktionellen Gruppe ausgewählt. Bei der mindestens einen funktionellen Gruppen handelt es sich um eine der folgenden Gruppen: Alkoholgruppe, Carbonylgruppe, Aminogruppe, und Kohlenstoff-Kohlenstoff-Mehrfachbindung.

Der Kohlenwasserstoff mit mindestens einer funktionellen Gruppe ist ein nicht-zyklischer Kohlenwasserstoff mit mindestens einer funktionellen Gruppe ausgewählt aus C-C-Doppelbindung, C-C-Dreifachbindung, und Carbonylgruppe, oder ein zyklischer nicht-aromatischer Kohlenwasserstoff mit mindestens einer funktionellen Gruppe ausgewählt aus C-C-Doppelbindung, C-C-Dreifachbindung, Carbonylgruppe, Alkoholgruppe und Aminogruppe.

Der zyklische Kohlenwasserstoff mit mindestens einer funktionellen Gruppe ausgewählt aus C-C-Doppelbindung, C-C-Dreifachbindung, Carbonylgruppe, Alkoholgruppe und Aminogruppe ist eine nicht-aromatische Verbindung, und mehr bevorzugt eine nicht-aromatische Verbindung mit mindestens zwei C-C-Doppelbindungen und/oder ein zyklisches Keton. Beispielsweise kann die zyklische nicht-aromatische Verbindung Cyclooctadien, Phellandren, Limonen, ein Terpinen oder ein Chinon sein.

Der nicht-zyklische Kohlenwasserstoff ist bevorzugt ein Kohlenwasserstoff mit mindestens einer C-C-Dreifachbindung und/oder mindestens zwei C-C-Doppelbindungen, und mehr bevorzug Acetylen oder Squalen.

Die heterozyklische Verbindung ist ausgewählt aus der Gruppe von Tetrahydrofuran, Tetrahydrothiophen, Piperidin, Pyrrolidin, 2,3-Dihydrofuran, 2,5-Dihydrofuran, 2,3-Dihydrothiophen, 2,5-Dihydrothiophen, 1-Pyrrolin, 2-Pyrrolin und 3-Pyrrolin.

In einer bevorzugten Ausführungsform wird die mindestens eine organische Beschichtungsvorläuferverbindung verdampft und in verdampfter Form in den Bereich des relaxierenden Plasmas eingespeist.

In einer bevorzugten Ausführungsform wird die mindestens eine organische Beschichtungsvorläuferverbindung verdampft und als Gasgemisch zusammen mit einem Inertgas, vorzugsweise Stickstoff, in den Bereich des relaxierenden Plasmas eingespeist.

Wenn mehr als eine organische Beschichtungsvorläuferverbindung verwendet wird, so können diese in einer bevorzugten Ausführungsform als Gemisch zusammen ins relaxierende Plasma eingespeist werden.

Wenn mehr als eine organische Beschichtungsvorläuferverbindung verwendet wird, so können in einer weiteren bevorzugten Ausführungsform die verschiedenen organischen Beschichtungsvorläuferverbindungen getrennt an verschiedenen Stellen ins relaxierende Plasma eingespeist werden. Die organischen Beschichtungsvorläuferverbindungen werden dabei mit zunehmender Empfindlichkeit (Neigung zum Fragmentieren) weiter stromabwärts ins relaxierende Plasma eingespeist, um eine weitgehend zerstörungsfreie, effiziente Anregung der jeweiligen organischen Beschichtungsvorläuferverbindung im Plasmastrahl zu erreichen. Dies bedeutet, dass weniger empfindliche Beschichtungsvorläuferverbindungen bevorzugt weiter oben (weiter stromaufwärts) ins relaxierende Plasma eingespeist werden, während empfindlichere Beschichtungsvorläuferverbindungen bevorzugt weiter unten (weiter stromabwärts) eingespeist werden.

Die organische Beschichtungsvorläuferverbindung ist bevorzugt ein Cycloalkan, ein Terpen, oder ein zyklischer Kohlenwasserstoff, der mindestens eine Amin- und/oder Alkoholgruppe enthält. Die Beschichtungsvorläuferverbindung ist mehr bevorzugt Limonen, Cyclopentanol, Cyclooctan oder 1,5-Cyclooctadien.

Die organische Beschichtungsvorläuferverbindung kann ein aromatisches oder konjugiertes π-Elektronensystem enthalten.

Da die Abscheidung siliziumhaltiger Beschichtungsvorläuferverbindung unter Atmosphärendruckplasmabedingungen zur Bildung elektrisch isolierender plasmapolymerer Schichten führt, enthält die mindestens eine organische Beschichtungsvorläuferverbindung bezogen auf ihre Gesamtatomzahl bevorzugt weniger als 10% Silizium und mehr bevorzugt weniger als 5% Silizium. In einer besonders bevorzugten Ausführungsform ist die organische Beschichtungsvorläuferverbindung siliziumfrei.

### Plasmapolymere Schicht

Die auf dem metallischen Substrat abgeschiedene plasmapolymere Schicht weist bevorzugt konjugierte Mehrfachbindungen auf, die zu einer hohen elektrischen Leitfähigkeit der plasmapolymeren Schicht und somit zu einem geringen Übergangswiderstand führen. Die konjugierten Mehrfachbindungen der plasmapolymeren Schicht sind vorzugsweise Kohlenstoff-Kohlenstoff, Kohlenstoff-Stickstoff oder Stickstoff-Stickstoff-Doppel- oder Dreifachbindungen.

Die Beschichtung gemäß dem ersten Aspekt der Erfindung kann auch in mehreren Beschichtungszyklen erfolgen.

Zur Verbesserung des Alterungsschutzes können der Schicht durch Sprühprozesse zwischen den einzelnen Beschichtungszyklen Korrosionsinhibitoren beigefügt werden. Korrosionsinhibitoren werden zugesetzt, um die Entstehung von Rost auf Metalloberflächen zu verhindern. Geeignete Korrosionsinhibitoren sind zum Beispiel Benzotriazol, Tolyltriazol, Benzimidazol, Borax, Natriumbenzoat, Molybdat, Nitrat, Nitrit, Silikat, Phosphat und organischen Phosphorverbindungen und Lösungen und Mischungen der genannten Verbindungen.

Die Abscheidung der plasmapolymeren Schicht kann auch in Kombination mit der Abscheidung von Metallpartikeln gemäß der DE102009048397A1 erfolgen.

### Plasmapolymere Schicht

Eine plasmapolymere Schicht im erfindungsgemäßen Sinn ist eine in einem Plasma oder mit Hilfe eines Plasmas abgeschiedene Polymerschicht, die insbesondere eine starke Vernetzung durch kovalente Bindungen aufweist. Die plasmapolymere Schicht enthält bevorzugt Kohlenstoff-Kohlenstoff, Kohlenstoff-Stickstoff oder Stickstoff-Stickstoff-Doppel- oder Dreifachbindungen, insbesondere -Doppelbindungen.

Die plasmapolymere Schicht ist bevorzugt organisch. Organische Verbindungen werden im Sinne der vorliegenden Erfindung wie üblich verstanden. Das heißt, es handelt sich um kohlenstoffhaltige Verbindungen, insbesondere um kohlenstoffhaltige Verbindungen mit mindestens einer Kohlenstoff-Wasserstoff-Bindung. Um eine bessere Leitfähigkeit der plasmapolymeren Schicht zu erreichen enthält die plasmapolymere Schicht bezogen auf ihre Gesamtatomanzahl bevorzugt weniger als 10% Silizium und mehr bevorzugt weniger als 5% Silizium. In einer besonders bevorzugten Ausführungsform ist die plasmapolymere Schicht siliziumfrei.

Die plasmapolymere Schicht umfasst bevorzugt funktionelle Gruppen an der dem Substrat abgewandten Oberfläche. In einer bevorzugten Ausführungsform weisen in der dem Substrat abgewandten Oberfläche der plasmapolymeren Schicht mindestens 10 % der Oberflächenatome eine sauerstoffhaltige funktionelle Gruppe auf. Die Analyse der abgeschiedenen haftvermittelnden Schichten kann mittels Röntgenphotoelektronenspektroskopie (XPS) erfolgen. Die aufgezeichneten XPS-Signale der funktionellen Gruppen können mit einer Fit-Funktion analysiert und so quantifiziert werden.

Einerseits ist ein hoher Kohlenstoffanteil vorteilhaft, da Kohlenstoff-Kohlenstoff-Mehrfachbindungen, im Gegensatz zu Sauerstoff, konjugierte Doppelbindungssysteme ausbilden können, die vermutlich zu einer hohen Leitfähigkeit der plasmapolymeren Schicht beitragen. Andererseits ist ein bestimmter Anteil an Sauerstoff und Stickstoff vorteilhaft, da diese Atome aufgrund ihrer hohen Elektronegativität und der Ausbildung von reaktiven funktionellen Gruppen zur Haftfestigkeit der plasmapolymeren Schicht beitragen können. Das Stoffmengenverhältnis von Kohlenstoff zu Sauerstoff in der plasmapolymeren Schicht ist daher bevorzugt größer als 2. Die Zusammensetzung der plasmapolymeren Schicht enthält bevorzugt, bezogen auf ihre Gesamtatomzahl ohne Wasserstoff, minimal 50 und maximal 90 Atomprozente Kohlenstoff, minimal 0 und maximal 30 Atomprozente Sauerstoff, und minimal 0 und maximal 20 Atomprozente Stickstoff.

Die Dicke der plasmapolymeren Schicht beträgt bevorzugt weniger als 1 pm, mehr bevorzugt weniger als 100 nm, und am meisten bevorzugt weniger als 20 nm.

Die plasmapolymere Schicht weist bei einer Schichtdicke im Bereich von 10 bis 100 nm bevorzugt einen Schichtwiderstand im Bereich von 2 bis 50.000 Ohm, mehr bevorzugt einen Schichtwiderstand von weniger als 35.000 Ohm, und am meisten bevorzugt einen Schichtwiderstand von weniger als 20.000 Ohm auf. Der Schichtwiderstand im erfindungsgemäßen Sinn entspricht der Impedanz. Die Impedanz wird auch als Wechselstromwiderstand bezeichnet. In der vorliegenden Erfindung wurde die Impedanz mittels elektrochemischer Impedanzspektroskopie bei 0,01 Hz bestimmt. Die elektrochemische Impedanzspektroskopie bestimmt die Impedanz elektrochemischer Systeme als Funktion der Frequenz einer Wechselspannung bzw. des Wechselstroms. Das Verfahren der elektrochemischen Impedanzspektroskopie ist dem Fachmann geläufig und wird beispielsweise in der Online-Enzyklopädie *Römpp Online* beschrieben
(https://roempp.thieme.de/roempp4.0/do/data/RD-09-00371) .

Die plasmapolymere Schicht weist bei einer Schichtdicke im Bereich von 10 bis 100 nm bevorzugt eine Dielektrizitätskonstante im Bereich von 50 bis 20.000, mehr bevorzugt im Bereich von 100 bis 10.000, und am meisten bevorzugt im Bereich von 150 bis 5.000 auf. In der vorliegenden Erfindung wurde die Dielektrizitätskonstante mittels elektrochemischer Impedanzspektroskopie im Frequenzbereich von 1 Hz bis 10 kHz bestimmt.

Die plasmapolymere Schicht ist bevorzugt durch das Verfahren gemäß dem ersten Aspekt der Erfindung erhältlich.

### Elektrode

Gemäß dem zweiten Aspekt stellt die Erfindung eine Elektrode bereit, die ein metallisches Substrat mit einer Oberfläche, eine plasmapolymere Schicht auf der Oberfläche des metallischen Substrats, und eine Schicht, die ein Aktivmaterial umfasst, auf der dem Substrat abgewandten Oberfläche der plasmapolymeren Schicht umfasst, wobei die plasmapolymere Schicht konjugierte Mehrfachbindungen enthält. Bevorzugte Ausführungsformen sind Gegenstand der abhängigen Patentansprüche 7-10 sowie der Merkmalssätze 17-19.

Im Folgenden werden Merkmale und bevorzugte Ausführungsformen beschrieben, die sich sowohl auf die Elektrode gemäß dem zweitenAspekt der vorliegenden Erfindung beziehen.

### Metallisches Substrat

Als metallisches Substrat der Elektrode können solche Substrate verwendet werden, wie sie zuvor bereits beschrieben wurden. Das metallische Substrat ist bevorzugt eine Metallfolie. Metallfolien aus Kupfer, Silber, Eisen, Nickel, Cobalt und Aluminium sind besonders bevorzugt. Die am meisten bevorzugten metallischen Substrate sind Aluminium- und Kupferfolien. Die verwendeten Aluminium- und Kupferfolien werden bevorzugt durch Walzen oder elektrolytisch hergestellt.

### Plasmapolymere Schicht

Die plasmapolymere Schicht wird bevorzugt gemäß dem Verfahren nach dem ersten Aspekt der vorliegenden Erfindung hergestellt. Die plasmapolymere Schicht ist bevorzugt eine plasmapolymere Schicht wie im ersten Aspekt der Erfindung definiert.

### Aktivmaterial

Als Aktivmaterial im erfindungsgemäßen Sinn werden Materialien, nämlich Elektrodenaktivmaterialien, bezeichnet, die bei ihrer Oxidation oder Reduktion Ionen einlagern bzw. freisetzen. Bevorzugte Aktivmaterialien sind Lithium-Übergangsmetalloxid-Verbindungen, wie beispielsweise Lithium-Eisen-Phosphat (LiFePO₄), Lithium-Kobalt-Oxid (LiCoO₂), Lithium-Mangan-Oxid Spinell (LiMn₂O₄) oder Lithium-Nickel-Kobalt-Mangan-Oxid (Li(NiₓCo_{y}Mn_{z})O₂). Lithium-Übergangsmetalloxid-Verbindungen können in einem reversiblen Redoxzyklus bei ihrer Reduktion reversibel Lithiumionen einlagern und bei der folgenden Oxidation wieder freisetzen. Die Lithium-Übergangsmetalloxid-Verbindungen können auch mit anderen chemischen Elementen, insbesondere mit weiteren Übergangsmetallen, dotiert sein. Das Aktivmaterial ist mehr bevorzugt Lithium-Nickel-Kobalt-Mangan-Oxid (Li(NiₓCo_{y}Mn_{z})O₂). Lithium-Nickel-Kobalt-Mangan-Oxid wird in der vorliegenden Erfindung auch als NCM abgekürzt. NCM findet als Aktivmaterial der Kathode einer Batteriezelle oder eines Lithium-Ionen-Akkumulator vorteilhafte Verwendung. Durch die Dotierung mit Mangan wird im Vergleich zu Lithium-Kobalt-Oxid eine höher thermische Stabilität und ein verbessertes elektrochemisches Verhalten im Entlade-Lade-Zyklus erreicht.

### Verfahren zur Herstellung einer Elektrode

Gemäß dem dritten Aspekt betrifft die Erfindung ein Verfahren zur Herstellung einer Elektrode gemäß dem zweiten Aspekt der Erfindung. Das Verfahren umfasst die folgenden Schritte: Reinigen einer Oberfläche eines metallischen Substrats, Abscheiden einer plasmapolymeren Schicht auf der Oberfläche des metallischen Substrats gemäß dem Verfahren nach dem ersten Aspekt der Erfindung, und Aufbringen eines Aktivmaterials auf der dem Substrat abgewandten Oberfläche der plasmapolymeren Schicht, dadurch gekennzeichnet, dass die plasmapolymere Schicht unter Atmosphärendruck abgeschieden wird. Bevorzugte Ausführungsformen sind Gegenstand der Merkmalssätze 20-23.

Im Folgenden werden Merkmale und bevorzugte Ausführungsformen beschrieben, die sich auf das Verfahren gemäß dem drittenAspekt der vorliegenden Erfindung beziehen.

### Dispersion

Das Aktivmaterial wird bevorzugt in Form einer Dispersion, insbesondere einer Aufschlämmung, auf die Oberfläche der dem Substrat abgewandten Seite der plasmapolymeren Schicht aufgebracht. Neben den Aktivmaterialien können auch Additive, Lösungs- sowie Bindemittel in der Dispersion enthalten sein. Die Wahl der Misch- und Dispergierreihenfolge ist auf das zu fertigende Elektrodendesign abzustimmen. Die trockenen, festen Bestandteile können vor der Zugabe des Lösungsmittels und des Bindemittels vorgemischt werden. Die so erhaltene Trockenmischung kann nach der Zugabe des Lösungsmittels dispergiert werden. In einer weiteren Ausführungsform der vorliegenden Erfindung können auch feste und flüssige Bestandteile ohne eine vorhergehende Vormischung der trockenen Bestandteile in einem Schritt dispergiert werden. Die Dispersion kann mit einem Auftragswerkzeug, beispielsweise einer Schlitzdüse, einem Rakel, einer Rasterwalze etc., aufgebracht werden.

### Aktivmaterial

Bevorzugte Aktivmaterialien sind Lithium-Übergangsmetalloxid-Verbindungen, wie beispielsweise Lithium-Eisen-Phosphat (LiFePO₄), Lithium-Kobalt-Oxid (LiCoO₂), Lithium-Mangan-Oxid Spinell (LiMn₂O₄) oder Lithium-Nickel-Kobalt-Mangan-Oxid (Li(NiₓCo_{y}Mn_{z})O₂). Das Aktivmaterial ist mehr bevorzugt Lithium-Nickel-Kobalt-Mangan-Oxid (Li(NiₓCo_{y}Mn_{z})O₂).Das Aktivmaterial wird bevorzugt in Pulverform verwendet, um die Dispergierung zu verbessern.

### Kalandrieren und Trocknen

In einer bevorzugten Ausführungsform des Verfahrens wird das Aktivmaterial nach der Aufbringung durch Kalandrieren und Trocknen weiterbehandelt.

Nach der Beschichtung kann das beschichtete Substrat getrocknet werden. Die Trocknung kann beispielsweise in Luft (insbesondere in getrockneter Luft) oder bevorzugt in einer Inertgasatmosphäre erfolgen. Allgemein kann das Gasgemisch für die Trocknung geeignet ausgewählt werden. Die Trocknung kann bei Normaldruck oder auch bei Niederdruck, in einem statischen oder einem dynamischen Vakuum erfolgen. Beim Trocknen wird das Lösungsmittel dem Substrat durch Wärmezufuhr entzogen, und kann zurückgewonnen oder der thermischen Verwertung zugeführt werden. Das Trocken erfolgt bevorzugt in einem dafür vorgesehenen Trockner. Der Trockner kann zur Realisierung eines individuellen Temperaturprofils in unterschiedliche Temperaturzonen unterteilt werden. Nach dem Trocknerdurchlauf kann eine Kühlung der Folien auf Raumtemperatur erfolgen. Beim Kalandrieren wird das beschichtete Substrat beispielsweise durch ein oder mehrere rotierende Walzenpaare verdichtet (Walzenkalandrierung). Die Verdichtung kann durch eine Ober- und Unterwalze erfolgen. Das Walzenpaar erzeugt einen genau zu definierenden Liniendruck, über den die Porosität des beschichteten Substrats eingestellt werden kann. Für eine definierte Oberflächenstruktur mit einer definierten Porosität ist ein konstanter Liniendruck entscheidend, der wiederum von der Oberflächenbeschaffenheit und Rundlaufgenauigkeit der Walzen abhängt.

Nach dem Kalandrieren kann eine weitere Trocknung durchgeführt werden, die bevorzugt im Vakuum erfolgt.

### Batteriezelle und Lithium-Ionen-Akkumulator

Gemäß dem vierten Aspekt betrifft die Erfindung eine Batteriezelle, die eine Elektrode gemäß dem zweiten Aspekt der Erfindung umfasst.

Der letzte Aspekt der Erfindung betrifft einen Lithium-Ionen-Akkumulator, der eine Elektrode gemäß dem zweiten Aspekt der Erfindung umfasst.

Die Batterie und der Lithium-Ionen-Akkumulator umfassen vorzugsweise mindestens eine Kathode, mindestens eine Anode und mindestens einen Elektrolyten. Die Elektrode gemäß dem zweiten Aspekt, die in der Batterie und der Lithium-Ionen-Akkumulator enthalten ist, ist bevorzugt die Kathode.

Im Folgenden wird eine Ausführungsform zur Herstellung der Batteriezelle und des Lithium-Ionen-Akkumulators gemäß den letzten beiden Aspekten der Erfindung beschrieben. Die Elektrode gemäß dem zweiten Aspekt als Kathode wird mit einer Zwischenschicht und einer Anode zu einer Zelle gestapelt oder gewickelt. Beim Stapelvorgang werden die Elektrodenfolien in einem sich wiederholenden Zyklus aus Anode, Separator, Kathode gestapelt. Beim Wickeln wird aus einem Separatorband, einem Anodenband, einem Separatorband und einem Kathodenband eine Rolle aus den übereinander gelegten Bändern erzeugt. Danach wird das so hergestellte Material in eine Verpackung eingebracht und mit einem Elektrolyten befüllt.

Als Anodenmaterial werden bevorzugt Graphit und verwandte Kohlenstoffe, nanokristallines, amorphes Silicium, Lithiumtitanate oder Zinnoxid verwendet. Graphit und verwandte Kohlenstoffe, bei denen eine Interkalation von Lithium stattfindet, sind besonders bevorzugte Anodenmaterialien.

Als Elektrolyt werden bevorzugt gelöste Lithium-Salze wie Lithiumhexafluorophosphat, Lithiumtetrafluorborat oder Lithiumbis(oxalato)borat verwendet. Die Lösung erfolgt dabei in wasserfreien aprotischen Lösungsmitteln wie Ethylencarbonat, Propylencarbonat, Dimethylcarbonat, Diethylcarbonat oder 1,2-Dimethoxyethan. Zudem können Polymere aus Polyvinylidenfluorid oder Polyvinylidenfluorid-Hexafluorpropen oder Lithiumphosphatnitrid als Elektrolyt verwendet werden.

Der Separator im Sinne der vorliegenden Erfindung ist ein Material, das Kathode und Anode, also die negative und positive Elektrode, in Batteriezellen und Akkumulatoren Zellen räumlich und elektrisch trennt. Als Separatoren werden vorzugsweise mikroporöse Membranen, beispielsweise polymere Folien aus einer oder mehreren Lagen, verwendet.

### BEISPIELE

Im Folgenden wird die Erfindung anhand von Ausführungsbeispielen illustriert.

Im Beispiel wird ein Artikel unter Anwendung des Verfahrens gemäß dem ersten Aspekt der Erfindung hergestellt und untersucht.

Eine organische, plasmapolymere Schicht mit einer Schichtdicke von weniger als 1 µm wurde im relaxierenden Plasma (Afterglow-Plasma) bei Atmosphärendruck auf einem auf einer Aluminiumlegierung als Substrat abgeschieden. Hierzu wurde eine Atmosphärendruckplasmaanlage mit einer Plasmadüse der Firma Plasmatreat verwendet. Die organische Vorläuferverbindung (20 g/h Cyclopentanol) wurde im verdampften Zustand zusammen mit 2 nL/min Stickstoff als Trägergas bei einem Abstand von 10 mm vom Düsenausgang in den Afterglow-Bereich des Plasmas eingespeist. Die Verfahrgeschwindigkeit der Düse, also die Geschwindigkeit, mit der die Düse relativ zum Substrat bewegt wurde, betrug hierbei 10 m/min. Dabei kann zusätzlich durch die Düse selbst ein Mantelstrahl aus Inertgas am Düsenausgang erzeugt werden. Die Anregung des Plasmas erfolgte durch eine bogenähnliche Entladung in einem Jet-System unter Verwendung von Stickstoff als Prozessgas (Ionisationsgas, 29 nL/min). Der Artikel bestehend aus einem Substrat und der darauf abgeschiedenen plasmapolymeren Schicht wurde an Raumatmosphäre gelagert und die plasmapolymere Schicht anschließend charakterisiert.

Im Rahmen der vorliegenden Erfindung steht die Einheit "nL" für Norm-Liter. Ein Norm-Liter entspricht der Gasmenge, die unter Normalbedingungen ein Volumen von 1 Liter einnehmen würde.

Die chemische Zusammensetzung der Beschichtung wurde mittels Röntgenphotoelektronenspektroskopie (XPS) bestimmt (siehe Tabelle 1). Die aufgezeichnet XPS-Signale der funktionellen Gruppen mit einer Fit-Funktion analysiert und so quantifiziert (Tabelle 2).

**Tabelle 1**

| **Beschichtungsvorläuferverbindung** | Cyclopentanol |
|---|---|
| **Stoffmengenverhältnis C:O** | 2, 5:1 |
| **C[at%]** | 63 |
| **O[at%]** | 25 |
| **N[at%]** | 12 |
| **andere[at%]** | <1 |

**Tabelle 2**

| **Beschichtungsvorläuferverbindung** | Cyclopentanol |
|---|---|
| **Aliphatische Gruppen[at%]** | 27 |
| **Alkohol-/Ethergruppen[at%]** | 18 |
| **Carbonylgruppen[at%]** | 11 |
| **Carbonat-/Estergruppen[at%]** | 5 |

Tabelle 1 zeigt, dass die nach dem erfindungsgemäßen Verfahren abgeschiedene plasmapolymere Schicht einen hohen Kohlenstoffanteil von 63 % bezogen auf die Gesamtatommasse ohne Wasserstoff enthält. Zudem zeigt das hohe Kohlenstoff- zu Sauerstoffverhältnis von 2,5 zu 1, dass die Oxidation der organischen Beschichtungsvorläuferverbindung weitgehend unterdrückt werden konnte.

Tabelle 2 zeigt, dass die Oberfläche der nach dem erfindungsgemäßen Verfahren abgeschiedenen plasmapolymeren Schicht einen hohen Anteil an funktionellen Gruppen aufweist. Da die organische Beschichtungsvorläuferverbindung eine Alkoholgruppe enthält, deutet der hohe Anteil an Alkohol- und Ethergruppen darauf hin, dass ein bestimmter Anteil der funktionellen Gruppen nach der Abscheidung der plasmapolymeren Schicht erhalten bleibt. Ethergruppen entstehen vermutlich durch Kondensation zweier Alkohole und deuten damit ebenfalls auf die Stabilität der funktionellen Gruppe im erfindungsgemäßen Verfahren hin. Die Oberflächenfunktionalitäten tragen zur Haftfestigkeit der plasmapolymeren Schicht bei.

In einem weiteren Ausführungsbeispiel wurde gemäß dem oben beschriebenen Verfahren eine organische, plasmapolymere Schicht mit einer Schichtdicke von 30 nm beziehungsweise 90 nm im relaxierenden Plasma (Afterglow-Plasma) bei Atmosphärendruck auf jeweils einem Wafer mit einer 600 nm dicken Kupferschicht als Substrat abgeschieden. Als organische Vorläuferverbindung wurde Acetylen eingesetzt. Die Schichtdicke wurde mittels Ellipsometrie auf einem zeitgleich abgeschiedenen Siliziumwafer bestimmt.

Die Schichtwiderstände der so hergestellten Schichten wurden standardmäßig durch elektrochemische Impedanzmessung ermittelt, wie sie unter anderem in der Online-Enzyklopädie *Römpp Online* beschrieben wird (https://roempp.thieme.de/roempp4.0/do/data/RD-09-00371, aufgerufen am 30. Januar 2018). Die Messung beinhaltet folgende Schritte, die dem Fachmann jeweils geläufig sind. Zunächst wurde eine leitfähige Testlösung als Kontaktmedium für die zu untersuchende plasmapolymere Schicht hergestellt. Dann erfolgte die Messung der Wasseraufnahme und damit der Kapazitätsveränderung mittels der elektrochemischen Impedanzspektroskopie in den zu messenden plasmapolymeren Schichten auf dem leitfähigen Substrat. Anschließend erfolgte die Auswertung der elektrochemischen Impedanzspektroskopie zum Zwecke der Bestimmung der Schichtwiderstände. Die Dielektrizitätskonstante ε der Schichten wurde ebenfalls mittels elektrochemischer Impedanzspektroskopie im Frequenzbereich von 1 Hz bis 10 kHz bestimmt. Die Ergebnisse sind in Tabelle 3 dargestellt. Die hohen Werte der Dielektrizitätskonstanten der untersuchten plasmapolymeren Schichten deuten auf eine gute Verbindung der Substrate mit den plasmapolymeren Schichten sowie die Kurvenform der Messsignale auf das Vorhandensein von Poren in den plasmapolymeren Schichten hin.

**Tabelle 3 (Werte ermittelt aus drei unabhängigen Messungen)**

| **Schichtdicke der plasmapolymeren Schicht** | **Impedanz bei 0,01 Hz** | **Dielektrizitätskonstante ε** |
|---|---|---|
| 30 nm ± 4 | 15.250 Ohm ± 5.200 | 325 ± 45 |
| 90 nm ± 7 | 31.800 Ohm ± 2.600 | 1.510 ± 185 |

## Patentansprüche

1. Verfahren zur Abscheidung einer plasmapolymeren Schicht in einem Atmosphärendruckplasma auf einem metallischen Substrat, wobei das Plasma durch eine Entladung zwischen Elektroden erzeugt wird,
**dadurch gekennzeichnet, dass** mindestens eine organische Beschichtungsvorläuferverbindung in den Bereich des relaxierenden Plasmas eingespeist und als plasmapolymere Schicht auf dem metallischen Substrat abgeschieden wird,
wobei Stickstoff oder Formiergas als Prozessgas verwendet wird und die mindestens eine organische Beschichtungsvorläuferverbindung ausgewählt ist aus der Gruppe, bestehend aus heterozyklischen Verbindungen, zyklischen nicht-funktionalisierten Kohlenwasserstoffen und Kohlenwasserstoffen mit mindestens einer funktionellen Gruppe, ausgewählt aus Alkoholgruppe, Carbonylgruppe, Aminogruppe und Kohlenstoff-Kohlenstoff-Mehrfachbindung,
wobei die heterozyklische Verbindung Tetrahydrofuran, Tetrahydrothiophen, Piperidin, Pyrrolidin, 2,3-Dihydrofuran, 2,5-Dihydrofuran, 2,3-Dihydrothiophen, 2,5-Dihydrothiophen, 1-Pyrrolin, 2-Pyrrolin oder 3-Pyrrolin ist, und
wobei der Kohlenwasserstoff mit mindestens einer funktionellen Gruppe ein nicht-zyklischer Kohlenwasserstoff mit mindestens einer funktionellen Gruppe, ausgewählt aus C-C-Doppelbindung, C-C-Dreifachbindung, und Carbonylgruppe, oder ein zyklischer nicht-aromatischer Kohlenwasserstoff mit mindestens einer funktionellen Gruppe, ausgewählt aus C-C-Doppelbindung, C-C-Dreifachbindung, Carbonylgruppe, Alkoholgruppe und Aminogruppe, ist.

2. Verfahren nach Anspruch 1, bei dem die mindestens eine organische Beschichtungsvorläuferverbindung als Gasgemisch zusammen mit einem Inertgas, vorzugsweise Stickstoff, in den Bereich des relaxierenden Plasmas eingespeist wird, wobei der Bereich des relaxierenden Plasmas außerhalb der Entladung liegt, die insbesondere ein Lichtbogen oder eine lichtbogenähnliche Entladung ist.

3. Verfahren nach mindestens einem der vorhergehenden Ansprüche, bei dem das Plasma ein Plasmastrahl ist und bei dem ein Mantelstrahl aus Inertgas um den Düsenausgang der Plasmadüse herum erzeugt wird.

4. Verfahren nach mindestens einem der vorhergehenden Ansprüche, bei dem die mindestens eine organische Beschichtungsvorläuferverbindung ein Cycloalkan, ein Terpen, oder ein zyklischer Kohlenwasserstoff ist, der mindestens eine Amin- und/oder Alkoholgruppe aufweist.

5. Verfahren nach mindestens einem der Ansprüche 1 bis 4, bei dem eine Plasmadüse verwendet wird, die die folgenden Elemente umfasst:
ein Gehäuse, das einen von einem Prozessgas durchströmten Düsenkanal bildet,
eine im Düsenkanal angeordnete Elektrode,
eine Gegenelektrode, und
einen Hochfrequenzgenerator zum Anlegen einer Spannung zwischen der Elektrode und der Gegenelektrode, um einen Plasmastrahl zu bilden, der aus einem Auslass des Gehäuses austritt,
einen im Düsenkanal zwischen der Elektrode und dem Auslass angeordneten Beschichtungsdüsenkopf mit einer inneren Gitterstruktur, und
einer Einrichtung zum Einspeisen der verdampften,
mindestens einen organischen Beschichtungsvorläuferverbindung in den Plasmastrahl im relaxierenden Bereich des Plasmas im Düsenkopf.

6. Elektrode, die
ein metallisches Substrat mit einer Oberfläche,
eine plasmapolymere Schicht auf der Oberfläche des metallischen Substrats, und
eine Schicht, die ein Aktivmaterial umfasst, auf der dem Substrat abgewandten Oberfläche der plasmapolymeren Schicht umfasst,
wobei die plasmapolymere Schicht konjugierte Mehrfachbindungen enthält.

7. Elektrode nach Anspruch 6, in der das Aktivmaterial Lithium-Eisen-Phosphat, Lithium-Kobalt-Oxid, Lithium-Mangan-Oxid Spinell oder Lithium-Nickel-Kobalt-Mangan-Oxid ist.

8. Elektrode nach Anspruch 6 oder 7, wobei die plasmapolymere Schicht gemäß dem Verfahren nach den Ansprüchen 1 bis 5 erhältlich ist.

9. Elektrode gemäß mindestens einem der Ansprüche 6 bis 8, wobei die plasmapolymere Schicht bezogen auf ihre Gesamtatomzahl weniger als 10% Silizium, vorzugsweise weniger als 5% Silizium, enthält, und mehr bevorzugt siliziumfrei ist.

10. Elektrode gemäß mindestens einem der Ansprüche 6 bis 9, wobei Stoffmengenverhältnis C:O in der plasmapolymeren Schicht großer als 2 ist, und in dem die Zusammensetzung der plasmapolymeren Schicht bezogen auf ihre Gesamtatomzahl ohne Wasserstoff
minimal 50 und maximal 90 Atomprozente C,
minimal 0 und maximal 30 Atomprozente O, und
minimal 0 und maximal 20 Atomprozente N enthält.

11. Verfahren zur Herstellung einer Elektrode gemäß mindestens einem der Ansprüche 6 bis 10, das die folgenden Schritte umfasst:
Reinigen einer Oberfläche eines metallischen Substrats,
Abscheiden einer plasmapolymeren Schicht auf der Oberfläche des metallischen Substrats gemäß dem Verfahren nach mindestens einem der Ansprüche 1 bis 5, und
Aufbringen eines Aktivmaterials auf der dem Substrat abgewandten Oberfläche der plasmapolymeren Schicht,
**dadurch gekennzeichnet, dass** die plasmapolymere Schicht unter Atmosphärendruck abgeschieden wird.

12. Batteriezelle, die eine Elektrode nach mindestens einem der Ansprüche 6 bis 10 umfasst.

13. Lithium-Ionen-Akkumulator, der eine Elektrode nach mindestens einem der Ansprüche 6 bis 10 umfasst.

14. Verfahren nach mindestens einem der Ansprüche 2 bis 4, bei dem eine Plasmadüse verwendet wird, die die folgenden Elemente umfasst:
ein Gehäuse, das einen von einem Prozessgas durchströmten Düsenkanal bildet,
eine im Düsenkanal angeordnete Elektrode,
eine Gegenelektrode,
einen Hochfrequenzgenerator zum Anlegen einer Spannung zwischen der Elektrode und der Gegenelektrode, um einen Plasmastrahl zu bilden, der aus einem Auslass des Gehäuses austritt,
einen im Düsenkanal zwischen der Elektrode und dem Auslass angeordneten mehrteiligen Beschichtungsdüsenkopf (60) bestehend aus einem inneren Teil (70) mit einem Austritt am unteren Ende des inneren Teils (70), einem äußeren Teil (80), und einem Einspeisebereich (90), der durch den Raum zwischen dem inneren Teil (70) und dem äußeren Teil (80) gebildet wird, wobei der Austritt am unteren Ende des inneren Teils (70) eine innere Struktur (200) umfasst, die ein Mittel zum Behindern des Eintritts des Lichtbogens oder der lichtbogenähnlichen Entladung in den Einspeisebereich (90) darstellt, und
eine Einrichtung zum Einspeisen der verdampften, mindestens einen organischen Beschichtungsvorläuferverbindung in den Plasmastrahl im relaxierenden Bereich des Plasmas im Einspeisebereich (90) im Düsenkopf.

## Claims

1. A method for depositing a plasma polymer layer in an atmospheric pressure plasma onto a metallic substrate, wherein the plasma is generated by a discharge between electrodes,
**characterised in that** at least one organic coating precursor compound is fed into the area of the relaxing plasma, and is deposited as a plasma polymer layer onto the metallic substrate,
wherein nitrogen or a forming gas is used as a process gas and the at least one organic coating precursor compound is selected from the group consisting of heterocyclic compounds, cyclic non-functionalised hydrocarbons and hydrocarbons with at least one functional group selected from an alcohol group, a carbonyl group, an amino group and a multiple carbon-carbon bond,
wherein the heterocyclic compound is tetrahydrofuran, tetrahydrothiophene, piperidine, pyrrolidine, 2,3-dihydrofuran, 2,5-dihydrofuran, 2,3-dihydrothiophene, 2,5-dihydrothiophene, 1-pyrroline, 2-pyrroline or 3-pyrroline, and
wherein the hydrocarbon with at least one functional group is a non-cyclic hydrocarbon with at least one functional group selected from a C-C double bond, C-C triple bond, and carbonyl group, or a cyclic non-aromatic hydrocarbon with at least one functional group selected from a C-C double bond, CC triple bond, carbonyl group, alcohol group and amino group.

2. The method according to claim 1, in which the at least one organic coating precursor compound is fed as a gas mixture together with an inert gas, preferably nitrogen, into the area of the relaxing plasma, wherein the area of the relaxing plasma is located outside the discharge, which is in particular an arc or an arc-like discharge.

3. The method according to at least one of the preceding claims, in which the plasma is a plasma jet and in which a jacket jet of inert gas is generated around the nozzle outlet of the plasma nozzle.

4. The method according to at least one of the preceding claims, in which the at least one organic coating precursor compound is a cycloalkane, a terpene, or a cyclic hydrocarbon which has at least one amine and/or alcohol group.

5. The method according to at least one of claims 1 to 4, in which a plasma nozzle is used which comprises the following elements:
a housing, which forms a nozzle channel through which a process gas flows,
an electrode, arranged in the nozzle channel,
a counter electrode, and
a high frequency generator for applying a voltage between the electrode and the counter electrode to form a plasma jet, exiting from an outlet of the housing,
a coating nozzle head with an inner grid structure, arranged in the nozzle channel between the electrode and the outlet, and
an apparatus for feeding in the evaporated,
at least one organic coating precursor compound into the plasma jet in the relaxing area of the plasma in the nozzle head.

6. An electrode, comprising
a metallic substrate with a surface,
a plasma polymer layer on the surface of the metallic substrate, and
a layer, which comprises an active material, on the surface of the plasma polymer layer facing away from the substrate,
wherein the plasma polymer layer contains conjugated multiple bonds.

7. The electrode according to claim 6, in which the active material is lithium iron phosphate, lithium cobalt oxide, lithium manganese oxide spinel or lithium nickel cobalt manganese oxide.

8. The electrode according to claim 6 or 7, wherein the plasma polymer layer is obtainable according to the method according to claims 1 to 5.

9. The electrode according to at least one of claims 6 to 8, wherein the plasma polymer layer, based on its total atom amount, contains less than 10% silicon, preferably less than 5% silicon, and more preferably is silicon-free.

10. The electrode according to at least one of claims 6 to 9, wherein the molar ratio C:O in the plasma polymer layer is greater than 2, and in which the composition of the plasma polymer layer, based on its total atom number without hydrogen, contains
at least 50 and at most 90 atomic percent C,
at least 0 and at most 30 atomic percent O, and
at least 0 and at most 20 atomic percent N.

11. A method for producing an electrode according to at least one of claims 6 to 10, comprising the following steps:
cleaning a surface of a metallic substrate,
depositing a plasma polymer layer on the surface of the metallic substrate according to the method according to at least one of claims 1 to 5, and
applying an active material to the surface of the plasma polymer layer facing away from the substrate,
**characterised in that** the plasma polymer layer is deposited under atmospheric pressure.

12. A battery cell comprising an electrode according to at least one of claims 6 to 10.

13. A lithium-ion accumulator, comprising an electrode according to at least one of claims 6 to 10.

14. The method according to at least one of claims 2 to 4, in which a plasma nozzle is used which comprises the following elements:
a housing, which forms a nozzle channel through which a process gas flows,
an electrode, arranged in the nozzle channel,
a counter electrode,
a high frequency generator for applying a voltage between the electrode and the counter electrode to form a plasma jet, exiting from an outlet of the housing,
a multi-part coating nozzle head (60), arranged in the nozzle channel between the electrode and the outlet, consisting of an inner part (70) with an outlet at the lower end of the inner part (70), an outer part (80), and a feed area (90) which is formed by the space between the inner part (70) and the outer part (80), wherein the exit at the lower end of the inner part (70) comprises an internal structure (200), which constitutes a means for obstructing the entry of the arc or arc-like discharge into the feed area (90), and
an apparatus for feeding the evaporated, at least one organic coating precursor compound into the plasma jet in the relaxing area of the plasma in the feed area (90) in the nozzle head.

## Revendications

1. Procédé pour déposer une couche de polymère plasma dans un plasma à pression atmosphérique sur un substrat métallique, dans lequel le plasma est généré par une décharge entre des électrodes,
**caractérisé en ce qu'**au moins un composé précurseur de revêtement organique est injecté dans la zone du plasma relaxant et est déposé sur le substrat métallique sous la forme d'une couche de polymère plasma,
dans lequel de l'azote ou du gaz de purge est utilisé en tant que gaz de traitement et l'au moins un composé précurseur de revêtement organique est choisi dans le groupe constitué de composés hétérocycliques, hydrocarbures cycliques non fonctionnalisés et hydrocarbures comportant au moins un groupe fonctionnel, choisi parmi un groupe alcool, un groupe carbonyle, un groupe amino et une liaison multiple carbone-carbone,
dans lequel le composé hétérocyclique est le tétrahydrofurane, tétrahydrothiophène, pipéridine, pyrrolidine, 2,3-dihydrofurane, 2,5-dihydrofurane, 2,3-dihydrothiophène, 2,5-dihydrothiophène, 1-pyrroline, 2-pyrroline ou 3-pyrroline, et
dans lequel l'hydrocarbure comportant au moins un groupe fonctionnel est un hydrocarbure non cyclique comportant au moins un groupe fonctionnel choisi parmi double liaison C-C, triple liaison C-C et groupe carbonyle, ou un hydrocarbure cyclique non aromatique comportant au moins un groupe fonctionnel choisi parmi double liaison C-C, triple liaison C-C, groupe carbonyle, groupe alcool et groupe amino.

2. Procédé selon la revendication 1, dans lequel l'au moins un composé précurseur de revêtement est introduit sous forme de mélange gazeux conjointement avec un gaz inerte, de préférence l'azote, dans la zone du plasma relaxant, dans lequel la zone du plasma relaxant se trouve en dehors de la décharge, qui est en particulier un arc électrique ou une décharge analogue à un arc électrique.

3. Procédé selon au moins l'une des revendications précédentes, dans lequel le plasma est un jet de plasma et dans lequel un jet d'enveloppe de gaz inerte est généré autour de la sortie de buse de la buse à plasma.

4. Procédé selon au moins l'une des revendications précédentes, dans lequel l'au moins un composé précurseur de revêtement est un cycloalcane, un terpène, ou un hydrocarbure cyclique, qui présente au moins un groupe amine et/ou alcool.

5. Procédé selon au moins l'une des revendications 1 à 4, dans lequel une buse à plasma, qui comprend les éléments suivants, est utilisée :
un boîtier, qui forme un canal de buse traversé par un gaz de traitement,
une électrode agencée dans le canal de buse,
une contre-électrode et
un générateur de haute fréquence permettant d'appliquer une tension entre l'électrode et la contre-électrode, afin de former un jet de plasma, qui sort par une sortie du boîtier,
une tête de buse de revêtement comportant une structure de grille interne, agencée dans le canal de buse entre l'électrode et la sortie, et
un appareil permettant d'injecter l'au moins un composé
organique précurseur de revêtement vaporisé dans le jet de plasma dans la zone de plasma relaxant dans la tête de buse.

6. Électrode, qui comprend
un substrat métallique avec une surface,
une couche de polymère plasma sur la surface du substrat métallique, et
une couche, qui comprend un matériau actif, sur laquelle la surface opposée au substrat comprend la couche de polymère plasma,
dans laquelle la couche de polymère plasma contient des liaisons multiples conjuguées.

7. Électrode selon la revendication 6, dans laquelle le matériau actif est le phosphate de lithium et de fer, l'oxyde de lithium et cobalt, le spinelle d'oxyde de lithium et manganèse ou l'oxyde de lithium, nickel, cobalt et manganèse.

8. Électrode selon la revendication 6 ou la revendication 7, dans laquelle la couche de polymère plasma peut être obtenue selon le procédé selon les revendications 1 à 5.

9. Électrode selon au moins l'une des revendications 6 à 8, dans laquelle la couche de polymère plasma contient, par rapport à son nombre d'atomes total, moins de 10 % de silicium, de préférence moins de 5 % de silicium et est de manière plus préférée exempte de silicium.

10. Électrode selon au moins l'une des revendications 6 à 9, dans laquelle le rapport molaire C:O dans la couche de polymère plasma est supérieur à 2 et dans laquelle la composition de la couche de polymère plasma, par rapport à son nombre total d'atomes sans hydrogène contient
au minimum 50 et au maximum 90 pour cent atomique de C,
au minimum 0 et au maximum 30 pour cent atomique de O, et
au minimum 0 et au maximum 20 pour cent atomique de N.

11. Procédé de production d'une électrode selon au moins l'une des revendications 6 à 10, qui comprend les étapes suivantes :
nettoyage d'une surface d'un substrat métallique,
dépôt d'une couche de polymère plasma sur la surface du substrat métallique selon le procédé selon au moins l'une des revendications 1 à 5, et
application d'un matériau actif sur la surface opposée au substrat de la couche de polymère plasma,
**caractérisé en ce que** la couche de polymère plasma est déposée sous pression atmosphérique.

12. Cellule de batterie, qui comprend une électrode selon au moins l'une des revendications 6 à 10.

13. Accumulateur lithium-ion, qui comprend une électrode selon au moins l'une des revendications 6 à 10.

14. Procédé selon au moins l'une des revendications 2 à 4, dans lequel une buse à plasma, qui comprend les éléments suivants, est utilisée :
un boîtier, qui forme un canal de buse traversé par un gaz de traitement,
une électrode agencée dans le canal de buse,
une contre-électrode,
un générateur de haute fréquence permettant d'appliquer une tension entre l'électrode et la contre-électrode, afin de former un jet de plasma, qui sort par une sortie du boîtier,
une tête de buse de revêtement (60) en plusieurs parties agencée dans le canal de buse entre l'électrode et la sortie, constituée d'une partie interne (70) avec une évacuation au niveau de l'extrémité inférieure de la partie interne (70), d'une partie externe (80) et d'une zone d'injection (90), qui est formée par l'espace entre la partie interne (70) et la partie externe (80), dans lequel l'évacuation au niveau de l'extrémité inférieure de la partie interne (70) comprend une structure interne (200), qui représente un moyen permettant d'éviter l'entrée de l'arc électrique ou de la décharge semblable à un arc électrique dans la zone d'injection (90), et
un appareil permettant d'injecter l'au moins un composé précurseur de revêtement organique vaporisé dans le jet de plasma dans la zone de plasma relaxant dans la zone d'injection (90) dans la tête de buse.
